(19) Europäisches Patentamt
European Patent Office
Office européen des brevets

(11) EP 4 547 731 B1

(12) EUROPEAN PATENT SPECIFICATION

(45) Date of publication and mention of the grant of the patent:
**17.06.2026 Bulletin 2026/25**

(21) Application number: **23736117.5**

(22) Date of filing: **29.06.2023**

(51) International Patent Classification (IPC):
***C08G 63/08*** *(2006.01)*

(52) Cooperative Patent Classification (CPC):
**C08G 63/08; C08G 63/823**

(86) International application number:
**PCT/EP2023/067811**

(87) International publication number:
**WO 2024/003243 (04.01.2024 Gazette 2024/01)**

(54) **PROCESS FOR THE SYNTHESIS OF POLY-4-HYDROXYBUTYRATE**

VERFAHREN ZUR SYNTHESE VON POLY-4-HYDROXYBUTYRAT

PROCÉDÉ DE SYNTHÈSE DE POLY-4-HYDROXYBUTYRATE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.06.2022 EP 22181950**

(43) Date of publication of application:
**07.05.2025 Bulletin 2025/19**

(73) Proprietor: **BASF SE**
**67056 Ludwigshafen am Rhein (DE)**

(72) Inventors:
- **SCHAUB, Thomas**
**67056 Ludwigshafen am Rhein (DE)**
- **BRUCHMANN, Bernd**
**67251 Freinsheim (DE)**
- **RODEWALD, Dieter**
**67056 Ludwigshafen am Rhein (DE)**
- **NICOLAS, Mathieu**
**69007 Lyon (FR)**
- **FALCONNET, Alban**
**69117 Heidelberg (DE)**

(74) Representative: **BASF IP Association**
**BASF SE**
**GBI-C006**
**67056 Ludwigshafen (DE)**

(56) References cited:
**CN-A- 102 643 301**

- **SONG QILEI ET AL: "Ring-opening polymerization of [gamma]-lactones and copolymerization with other cyclic monomers", PROGRESS IN POLYMER SCIENCE, PERGAMON PRESS, OXFORD, GB, vol. 110, 18 September 2020 (2020-09-18), XP086304321, ISSN: 0079-6700, [retrieved on 20200918], DOI: 10.1016/J.PROGPOLYMSCI.2020.101309**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 547 731 B1

## Description

The present application relates to a process for the synthesis of poly-4-hydroxybutyrate, the use of a kit comprising (i) one or more bases comprising an alkaline metal cation and (ii) one or more alcohols in said process, and to poly-4-hydroxybutyrate obtainable by said process.

Poly-4-hydroxybutyrates are an important class of aliphatic polyesters. Poly-4-hydroxybutyrate is a biocompatible and biodegradable thermoplastic material, and therefore it is currently of high interest to replace other common plastics, which are not or which are hardly biodegradable.

Currently, commercial poly-4-hydroxybutyrate is usually produced by biological fermentation using sugars as feedstock. However, these processes have certain drawbacks, e.g. inefficient use of the starting material due to the metabolisms of the microorganisms, relatively complex processes, low space-time-yield; and it is difficult to isolate and purify the product from the fermentation mixture.

Poly-4-hydroxybutyrate could also be synthesized by catalytic ring-opening polymerization reaction of γ-butyrolactone. The educt γ-butyrolactone is a cheap, easily available material which can be obtained from biomass feedstock. This provides access to a polymer which is not only biodegradable but also obtainable from renewable resources. However, traditionally, γ-butyrolactone was considered as non-polymerizable due to the low strain energy of the five membered ring compared to other easy to polymerize lactones as e.g. caprolactone (see: Q. Song et al., Polymer Journal, 2020, 52, 3-11). Certain progress was made in the last years due to the development of catalyst systems which are capable of polymerizing γ-butyrolactone to poly-4-hydroxybutyrate. However, usually low reaction temperatures below -30°C are required, the catalysts are rather elaborated, the obtained yields are only moderate and the reaction is to be carried out in a relatively diluted solution which is unfavorable from an economic perspective.

CN 102643301A discloses the use of pentacoordinated aluminum complexes bearing an alkoxide ligand for the polymerization of γ-butyrolactone to poly-4-hydroxybutyrate at temperatures of 25 °C to108 °C in an organic solvent. Despite that high yields of up to 95 % of the poly-4-hydroxybutyrate may be obtained by this process, the reaction mixture to be used is rather diluted with only 1 g γ-butyrolactone dissolved in 21 mL toluene, which makes the work-up costly, as all toluene must be removed in vacuo before further isolating the polymeric product. Another drawback is the multi-step synthesis of the elaborated aluminum catalyst starting from expensive and notoriously difficult to handle highly pyrophoric $AlMe_3$.

Macromolecules, 2018, 51, 9317-9322, describes the polymerization of γ-butyrolactone to poly-4-hydroxybutyrate using specific urea-derivatives in combination with alkali-alcoholates as initiators without a solvent. A conversion rate of γ-butyrolactone of 86 % was obtained at a reaction temperature of -40 °C at a γ-butyrolactone : Phenyl-Cyclohexyl-Urea : NaOMe ratio of 300 : 3 : 1. When increasing the reaction temperature to -20 °C the yield drops to 70 % at a ratio γ-butyrolactone : Phenyl-Cyclohexyl-Urea : NaOMe of 100 : 1 : 1 which is unfavorable from an economic point of view.

CN 109851765 discloses the polymerization of γ-butyrolactone to poly-4-hydroxybutyrate in the presence of specific N-heterocyclic olefins in combination with thiourea derivatives and alcohol in an organic solvent. Yields are not reported. The required temperature of -40 °C and the dedicated synthesis of specific N-heterocyclic olefines as well as of specific thiourea derivatives make this synthesis unfavorable from an economic point of view.

Polymer Chemistry, 2022, 13, 439-445, describes the polymerization of γ-butyrolactone to poly-4-hydroxybutyrate in the presence of benzylic alcohols in combination with dialkyl magnesium compounds and an additional solvent. The highest conversion of γ-butyrolactone of 72 % could be obtained at a reaction temperature of -50 °C at a γ-butyrolactone : $Ph_2CHOH$ : $MgBu_2$ ratio of 50 : 1 : 1 in a relatively diluted solution of 8 mol/L in toluene. As the reaction must be carried out at -50 °C and the reaction mixture is relatively diluted, and relatively high amounts of initiator are necessary for sufficient yields, this synthesis is unfavorable from an economic point of view.

Nature Chemistry, 2016, 8, 42-49 describes the polymerization of γ-butyrolactone to poly-4-hydroxybutyrate in the presence of benzylic alcohols in combination with $La[N(SiMe_3)_2]_3$. The highest polymer yield of 67 % was achieved with $Ph_2CHOH$ (benzylic alcohol) as initiator at a reaction temperature of -40°C and a γ-butyrolactone : $PhCH_2OH$ : $La[N(SiMe_3)_2]_3$ ratio of 100 : 2 : 1 in a THF solution by first mixing γ-butyrolactone and benzylic alcohol and then adding $La[N(SiMe_3)_2]_3$ at the given reaction temperature. Increasing the reaction temperature to -28 °C results in a drop of the yield to only 16 %. When changing - under otherwise identical conditions at -40 °C - the procedure in a way, that first the γ-butyrolactone and benzylic alcohol are dissolved in THF, cooled down and then $La[N(SiMe_3)_2]_3$ is added, the polymer yield is decreased to only 33%. This paper also discloses the use of a dedicated lanthanide-catalyst with a tailor-made multidentate phenolate ligand. Using this catalyst, the reaction is carried out without a benzylic alcohol. The highest polymer yield of 90% by using this catalyst was achieved at a reaction temperature of -40°C at a γ-butyrolactone : La-catalyst ratio of 100 : 1 in a 10M THF solution by first dissolving the catalyst in THF then adding γ-butyrolactone at the given reaction temperature. But when decreasing the catalyst loading to a γ-butyrolactone : La-catalyst ratio of 200 : 1, the polymer yield drops to 48%. Using the diol $C_6H_4(CH_2OH)_2$ in combination with the lanthanide catalyst at a ratio of 100 : 1 : 1.5, the highest polymer yield was only 33% at -40°C. As the reaction must be carried out at -40°C for acceptable yields, it is unfavorable from an economic point of view. Additionally, the Lanthanide-compounds are relatively expensive and

sensitive and a catalyst loading of at least 1 mol% is needed for acceptable yields, which is also not beneficial from an economic point of view.

Angewandte Chemie International Edition, 2016, 55, 4188-4193, describes the ring-opening polymerization of γ-butyrolactone to poly-4-hydroxybutyrate in the presence of a benzylic alcohol either in combination with a phosphazene base or with a strong alkaline base. The highest polymer yield of 90 % with the phosphazene base was achieved at a reaction temperature of -40 °C at a γ-butyrolactone : $PhCH_2OH$ : phosphazene ratio of 100 : 1.5 : 1 in a diluted solution of 10 mol/L in THF by first mixing γ-butyrolactone and benzylic alcohol and then adding the base at the given reaction temperature. When the reaction temperature is increased to -28 °C, the polymer yield massively drops to only 20 %. When replacing the phosphazene base by the simpler and cheaper base NaOMe under otherwise identical conditions, the yield drops to 72.8 % at a reaction temperature of -40 °C. Since the reaction must be carried out at -40 °C for acceptable yields, the reaction mixture is relatively diluted, a sensitive and expensive phosphazene base is needed as catalyst, and relatively high amounts of initiator are necessary for sufficient yields, this synthesis is unfavorable from an economic point of view.

Related prior art is

Song Qilei et al.: "Ring-opening polymerization of [gamma]-lactones and copolymerization with other cyclic monomers", Progress in Polymer Science, Pergamon Press, Oxford, GB, vol. 110, avialable online 18 September 2020 (2020-09-18).

It was a primary object of this invention to provide a process for the synthesis of poly-4-hydroxybutyrate by ring-opening polymerization of γ-butyrolactone which can be performed using a simple, easily accessible, and cheap catalyst, wherein the process provides the polymer in high yields. It was a further object to provide a process for ring-opening polymerization of γ-butyrolactone which does not require temperatures below -25°C, so that less energy is needed for cooling.

The primary object and other objects of the present invention are accomplished by a process for the synthesis of poly-4-hydroxybutyrate, said process comprising the steps of

(a) preparing a reaction mixture comprising

(i) one or more bases comprising an alkali metal cation

(ii) one or more alcohols
and

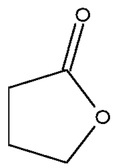

I

(iii) γ -butyrolactone (I)

wherein in the reaction mixture the molar ratio of γ-butyrolactone (iii) to the total amount of (i) bases comprising an alkali metal cation is 200 : 1 or higher,

wherein preparing the reaction mixture comprises

(a1) forming a premix comprising

(i) one or more bases comprising an alkali metal cation
and

(ii) one or more alcohols

(a2) providing (iii) γ-butyrolactone having a temperature of -25 °C or more
(a3) obtaining the reaction mixture by charging the premix formed in step (a1) into the γ-butyrolactone

having a temperature of -25 °C or higher provided in step (a2),

(b) chemically converting the γ-butyrolactone in said reaction mixture by ring opening-polymerization to poly-4-hydroxybutyrate at a temperature of -25 °C or higher.

Surprisingly it has been found that the order of combining

(i) the one or more bases comprising an alkali metal cation
(ii) the one or more alcohols
and
(iii) γ -butyrolactone

in step (a) has a significant influence on the yield of the ring-opening polymerization, and any deviation from the process defined by sub-steps (a1) through (a3) results in a significant reduction of the yield under otherwise identical conditions.
Therefore, it is crucial that in step (a) the reaction mixture (as defined above) for the ring-opening polymerization of (iii) γ-butyrolactone is prepared by carrying out the above-defined sub-steps (a1) through (a3) in the above-defined order.
In sub-step (a1), a premix is formed comprising or consisting of

(i) one or more bases comprising an alkali metal cation
and

(ii) one or more alcohols.

The base (i) is base comprising an alkali metal cation. The anion of the base (i) may be a proton acceptor (Brønsted base) and/or an electron pair donator (Lewis base). Preferably, the alkali metal cation is selected from the group consisting of $Li^+$, $Na^+$, $K^+$, $Rb^+$ and $Cs^+$, most preferably from the group consisting of $Li^+$, $Na^+$ and $K^+$.
Without wishing to be bound by any theory, it is presently assumed that the base (i) acts as a catalyst for the ring-opening polymerization of γ-butyrolactone, and the alcohol (ii) acts as an initiator for the ring opening polymerization of γ-butyrolactone.
Usually, in step (a1) the premix is formed by (a1.1) providing one or more bases (i) comprising an alkali metal cation (a.1.2) providing one or more alcohols (ii) (a.1.3) mixing the one or more bases (i) comprising an alkali metal cation provided in sub-step (a.1.1) with the one or more alcohols (ii) provided in sub-step (a.1.2) so that said premix results.
In sub-step (a2), (iii) γ-butyrolactone having a temperature of -25 °C or more, preferably a temperature in the range of from -25 °C to -10 °C is provided. In step (a2), providing γ-butyrolactone can be done continuously or discontinuously.
In sub-step (a3), the reaction mixture for the ring-opening polymerization is obtained by charging the premix formed in step (a1) into the γ-butyrolactone having a temperature of -25 °C or higher provided in step (a2).
In the reaction mixture prepared in step (a), the molar ratio of γ-butyrolactone (iii) to the total amount of (i) bases comprising an alkali metal cation is 200 : 1 or higher, preferably 200 : 1 to 800 : 1 and most preferred 200 : 1 to 400 : 1. Thus, the amount of base (i) as catalyst for the ring-opening polymerization of a given amount of γ-butyrolactone is rather low, compared to the prior art processes mentioned above, which is favorable from an economic point of view.
In step (b), γ-butyrolactone is chemically converted by ring opening-polymerization to poly-4-hydroxybutyrate in said reaction mixture prepared in step (a) at a temperature of -25 °C or higher, preferably at a temperature in the range of from -25 °C to +50 °C, preferably -25 °C to +30 °C, more preferably -25 °C to 0 °C, and most preferably at a temperature in the range of from -25 °C to -10 °C.
Thus, in the process disclosed herein, the ring-opening polymerization of γ-butyrolactone is carried out at higher temperatures than in the prior art processes (see e.g. Angewandte Chemie International Edition, 2016, 55, 4188-4193). Thus, advantageously, less cooling is necessary, resulting in energy savings.
In step (b), chemically converting γ-butyrolactone by ring opening-polymerization to poly-4-hydroxybutyrate is typically carried out at ambient pressure.
In the premix prepared in step (a1), preferably the base (i) comprising an alkali metal cation or one or more of the bases (i) comprising an alkali metal cation are selected from the group consisting of lithium alkoxides, sodium alkoxides and potassium alkoxides, preferably from the group consisting of lithium methoxide, sodium methoxide, potassium methoxide, lithium tertbutoxide, sodium tertbutoxide, potassium tertbutoxide, lithium benzylalcoholate, sodium benzylalcoholate and potassium benzylalcoholate.
More preferably, in the premix prepared in step (a1), each base (i) comprising an alkali metal cation is selected from the group consisting of lithium alkoxides, sodium alkoxides and potassium alkoxides, preferably from the group

consisting of lithium methoxide, sodium methoxide, potassium methoxide, lithium tertbutoxide, sodium tertbutoxide, potassium tertbutoxide, lithium benzylalcoholate, sodium benzylalcoholate and potassium benzylalcoholate.

The most preferred bases (i) are lithium tertbutoxide, sodium tertbutoxide, potassium tertbutoxide and potassium benzylalcoholate.

In the premix prepared in step (a1), preferably the alcohol (ii) or one or more of the alcohols (ii) are selected from the group consisting of

- methanol, ethanol, ethyleneglycol, diethyleneglycol, polyethyleneglycol, 1,2-propanediol, dipropyleneglycol, polypropyleneglycol, 1,3-propanediol, 1,4-butanediol, polytetra-methyleneglycol, 1,5-pentanediol, 1,6-hexanediol and

- benzylic alcohols according to formula (II)

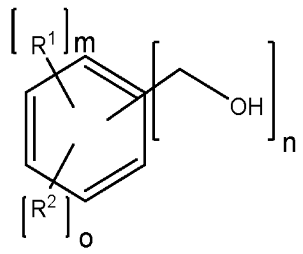

(II)

wherein

n is an integer from 1 to 4, preferably 1 or 2

m is an integer from 0 to 3,

o is 0 or 1

$$m + n + o \leq 6;$$

$R^1$ and $R^2$ are independently of one another selected from the group consisting of F, Cl, Br, OH, CN, $NH_2$, $NO_2$,

$C_1$-$C_{10}$-alkyl

$C_3$-$C_{10}$-cycloalkyl,

$C_3$-$C_{10}$-heterocyclyl comprising at least one heteroatom selected from N, O and S,

$C_5$-$C_{14}$-aryl,

$C_5$-$C_{10}$-heteroaryl comprising at least one heteroatom selected from N, O and S,

wherein said $C_1$-$C_{10}$-alkyl, $C_3$-$C_{10}$-cycloalkyl, $C_3$-$C_{10}$-heterocyclyl, $C_5$-$C_{14}$-aryl, resp. $C_5$-$C_{10}$-heteroaryl optionally has one or more further substituents selected from the group consisting of: F, Cl, Br, OH, CN, $NH_2$ and $C_1$-$C_{10}$-alkyl.

As used herein, $C_1$-$C_{10}$-alkyl is intended to include linear $C_1$-$C_{10}$-alkyl as well as branched $C_4$-$C_{10}$-alkyl alkyls, and n-$C_1$-$C_{10}$-alkyl, sec-$C_3$-$C_{10}$-alkyl as well as tert-$C_4$-$C_{10}$-alkyl.

More preferably, in the premix prepared in step (a1), each alcohol (ii) is selected from the above-defined group.

Among benzylic alcohols according to formula (II), 1,4-benzenedimethanol, 2,6-dichlorobenzylalcohol, 4-methylbenzylalcohol and 2,4,6-trimethyl-benzylalcohol are preferred.

The most preferred alcohols (ii) are methanol, ethanol, polyethyleneglycol, 1,4-butanediol, 1,6-hexanediol, benzylic alcohol, 1,4-benzenedimethanol, 2,6-dichlorobenzylalcohol, 4-methylbenzylalcohol and 2,4,6-trimethylbenzylalcohol.

In the premix prepared in step (a1), most preferably the base (i) comprising an alkali metal cation or one or more of the bases (i) comprising an alkali metal cation are selected from the above-defined group of preferred bases (i), and the alcohol (ii) or one or more of the alcohols (ii) are selected from the above-defined group of preferred alcohols (ii). More preferably, in the premix prepared in step (a1), each base (i) comprising an alkali metal cation is selected from the above-defined group of preferred bases (i), and each alcohol (ii) is selected from the above-defined group of preferred alcohols (ii).

In a specifically preferred process,

(i) said base comprising an alkali metal cation is an alkali metal alkoxide of the formula $MOR^3$ wherein M is selected from the group consisting of Li, Na and K
(ii) said alcohol is an alcohol of the formula $R^3OH$

wherein $R^3$ of (i) is identical to $R^3$ of (ii) and is preferably selected from the group consisting of methyl, ethyl, isopropyl, sec-butyl, tert-butyl and benzyl.

In the reaction mixture prepared in step (a), the molar ratio

of the total amount of (i) bases comprising an alkali metal cation

to the total amount of (ii) alcohols

is preferably in the range of from 1 : 1 to 10 : 1, more preferably from 1 : 1 to 8 : 1, most preferably of from 1 : 1 to 5 : 1.

In certain cases, it is preferred that the reaction mixture prepared in step (a) further comprises one or more solvents (beside the above-mentioned constituents (i), (ii) and (iii)). In certain cases, the reaction mixture prepared in step (a) consists of

(i) one or more bases comprising an alkali metal cation
(ii) one or more alcohols

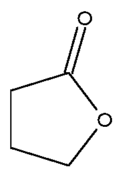

I

(iii) $\gamma$ -butyrolactone (I)

and one or more solvents.

Suitable solvents are those in which constituents (i) through (iii) as well as the product poly-4-hydroxybutyrate are soluble resp. with which they are mixable. The presence of one or more solvents in the reaction mixture enables homogeneous distribution of the reactants (i), (ii) and (iii) as defined above and facilitates their interaction.

In the reaction mixture prepared in step (a), preferably the solvent or one or more of the solvents are selected from the group consisting of aliphatic hydrocarbons, aromatic hydrocarbons, ethers, esters, N,N-dialkylamides, dialkylsulfoxides and nitriles.

More preferably, in the reaction mixture prepared in step (a), each solvent is selected from the group consisting of aliphatic hydrocarbons, aromatic hydrocarbons, ethers, esters, N,N-dialkylamides, dialkylsulfoxides and nitriles.

As used herein, the term "hydrocarbons" is intended to include halogenated hydrocarbons.

Further preferably, in the reaction mixture prepared in step (a), the solvent or one or more of the solvents are selected from the group consisting of dichloromethane, toluene, 2-methyl-tetrahydrofurane, 1,4-dioxane, glyme, diglyme, ethyl acetate, dimethylformamide, dimethylsulfoxide and acetonitrile.

Most preferably, in the reaction mixture prepared in step (a), each solvent is selected from the group consisting of dichloromethane, toluene, 2-methyl-tetrahydrofurane, 1,4-dioxane, glyme, diglyme, ethyl acetate, dimethylformamide, dimethylsulfoxide and acetonitrile.

For preparing the reaction mixture in step (a)

- a premix comprising (i) one or more bases comprising an alkali metal cation and (ii) one or more alcohols and one or more solvents
  and/or

- a mixture comprising (iii) γ -butyrolactone (I) and one or more solvents may be provided.

The solvent or one or more of the solvents are preferably selected from the group consisting of aliphatic hydrocarbons, aromatic hydrocarbons, ethers, esters, N,N-dialkylamides, dialkylsulfoxides and nitriles, most preferably from the group consisting of dichloromethane, toluene, 2-methyl-tetrahydrofurane, 1,4-dioxane, glyme, diglyme, ethyl acetate, dimethylformamide, dimethylsulfoxide and acetonitrile.
More preferably, each solvent is selected from the group consisting of aliphatic hydrocarbons, aromatic hydrocarbons, ethers, esters, N,N-dialkylamides, dialkylsulfoxides and nitriles, most preferably from the group consisting of dichloromethane, toluene, 2-methyl-tetrahydrofurane, 1,4-dioxane, glyme, diglyme, ethyl acetate and acetonitrile.
In certain cases, for preparing the reaction mixture in step (a) a premix in the form of a solution comprising (i) one or more bases comprising an alkali metal cation and (ii) one or more alcohols and one or more solvents may be provided in sub-step (a1).
Preferably, in the premix formed in sub-step (a1), the solvent or one or more of the solvents are selected from the group consisting of aliphatic hydrocarbons, aromatic hydrocarbons, ethers, esters, N,N-dialkylamides, dialkylsulfoxides and nitriles.
More preferably, in the premix prepared in step (a1), each solvent is selected from the group consisting of aliphatic hydrocarbons, aromatic hydrocarbons, ethers, esters, N,N-di-alkylamides, dialkylsulfoxides and nitriles.
Further preferably, in the premix formed in sub-step (a1), the solvent or one or more of the solvents are selected from the group consisting of dichloromethane, toluene, 2-methyl-tetrahydrofurane, 1,4-dioxane, glyme, diglyme, ethyl acetate, dimethylformamide, dimethylsulfoxide and acetonitrile.
Most preferably, in the premix prepared in step (a1), each solvent is selected from the group consisting of dichloromethane, toluene, 2-methyl-tetrahydrofurane, 1,4-dioxane, glyme, diglyme, ethyl acetate, dimethylformamide, dimethylsulfoxide and acetonitrile.
In certain cases, for preparing the reaction mixture in step (a) a mixture comprising (iii) γ -butyrolactone (I) and one or more solvents may be provided in sub-step (a2).
Preferably, in the mixture provided in sub-step (a2) the solvent or one or more of the solvents are selected from the group consisting of aliphatic hydrocarbons, aromatic hydrocarbons, ethers, esters, N,N-dialkylamides, dialkylsulfoxides and nitriles.
More preferably, in the mixture provided in sub-step (a2), each solvent is selected from the group consisting of aliphatic hydrocarbons, aromatic hydrocarbons, ethers, esters, N,N-di-alkylamides, dialkylsulfoxides and nitriles.
Further preferably, in the mixture provided in sub-step (a2), the solvent or one or more of the solvents are selected from the group consisting of dichloromethane, toluene, 2-methyl-tetrahydrofurane, 1,4-dioxane, glyme, diglyme, ethyl acetate, dimethylformamide, dimethylsulfoxide and acetonitrile.
Most preferably, in the mixture provided in sub-step (a2), each solvent is selected from the group consisting of dichloro-methane, toluene, 2-methyl-tetrahydrofurane, 1,4-dioxane, glyme, diglyme, ethyl acetate, dimethylformamide, dimethylsulfoxide and acetonitrile.
In more specific cases, for preparing the reaction mixture in step (a)

- a premix comprising (i) one or more bases comprising an alkali metal cation and (ii) one or more alcohols and one or more solvents
  and/or

- a mixture comprising (iii) γ -butyrolactone (I) and one or more solvents is provided.

The solvent or one or more of the solvents are preferably selected from the group consisting of aliphatic hydrocarbons, aromatic hydrocarbons, ethers, esters, N,N-dialkylamides, dialkylsulfoxides, and nitriles, most preferably from the group consisting of dichloromethane, toluene, 2-methyl-tetrahydrofurane, 1,4-dioxane, glyme, diglyme, ethyl acetate, dimethylformamide, dimethylsulfoxide and acetonitrile.
More preferably, each solvent is selected from the group consisting of aliphatic hydrocarbons, aromatic hydrocarbons, ethers, esters, N,N-dialkylamides, dialkylsulfoxides and nitriles, most preferably from the group consisting of dichloromethane, toluene, 2-methyl-tetrahydrofurane, 1,4-dioxane, glyme, diglyme, ethyl acetate, dimethylformamide, dimethylsulfoxide and acetonitrile.
In certain cases, the above-defined process further comprises drying of the γ-butyrolactone (I) by adding a drying agent, and optional separation of the dried γ-butyrolactone (I) from the drying agent before preparing the reaction mixture.

Drying can be achieved by means of any suitable drying agent.

The drying agent is preferably selected from the group consisting of selected from the group consisting of

$CaH_2$,

tosyl isocyanate,

and oxazolidines.

The oxazolidine is preferably selected from the group consisting of oxazolidines of formula (III), oxazolidines of formula (IV), and oxazolidines of formula (V)

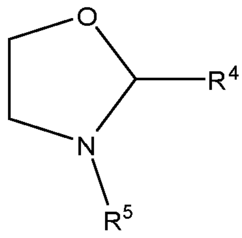

(III)

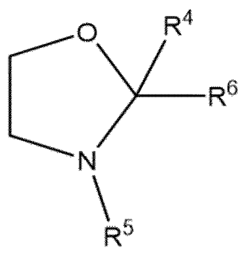

(IV)

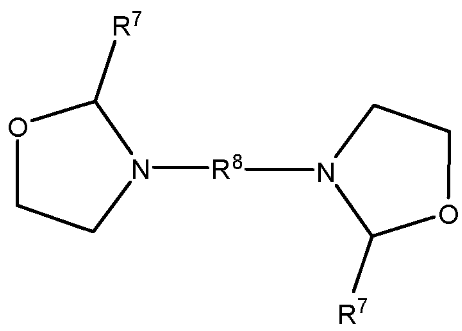

(V)

wherein

$R^4$, $R^5$, $R^6$, and $R^7$ are independently of one another selected from the group consisting of H- and $C_1$-$C_{10}$-alkyl and $R^8$ is a bridging unit comprising 1 to 20 -$CH_2$-units (methylene units) and optionally one or more moieties selected from the group consisting of

-NH-,

-O- (ether bridge),

-CO-(carbonyl)

-COO- (carboxyl)

and -NH-COO- (urethane).

As used herein, $C_1$-$C_{10}$-alkyl is intended to include linear $C_1$-$C_{10}$-alkyl as well as branched $C_4$-$C_{10}$-alkyl alkyls, and n-$C_1$-$C_{10}$-alkyl, sec-$C_3$-$C_{10}$-alkyl as well as tert-$C_4$-$C_{10}$-alkyl.

In certain preferred oxazolidines of formula (V), the bridging unit $R^8$ is

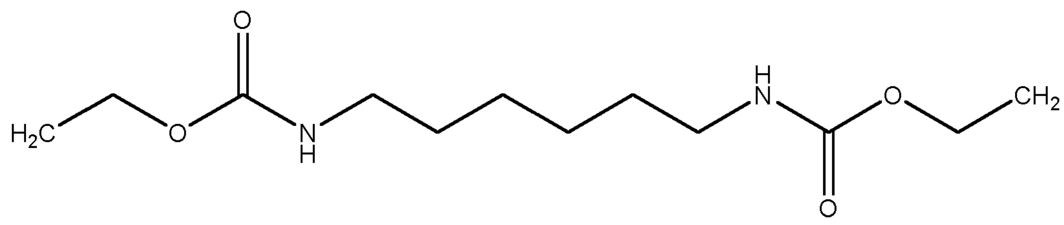

In certain preferred oxazolidines of formula (III) and (IV), resp., $R^4$ is selected from branched alkyl e. g. sec-$C_3$-$C_{10}$-alkyl or tert-$C_4$-$C_{10}$, $R^5$ is selected from n-$C_1$-$C_{10}$-alkyl and $R^6$ in formula (IV) is methyl.

Most preferably, the oxazolidine is of formula (VI)

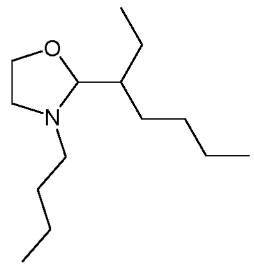

(VI)

The oxazolidine of formula (VI) is sold under the trade name "INCOZOL 2" by the company Incorez.

The above-mentioned substances are capable of acting as a drying agent for γ-butyrolactone.

Before preparing the reaction mixture, the dried γ-butyrolactone (I) may be separated from the drying agent by distillation, in order to avoid the presence of the drying agent resp. its reaction products with water in the target product poly-4-hydroxybutyrate. Especially when $CaH_2$ is used as the drying agent, it is preferable to separate the dried γ-butyrolactone (I) from the used-up $CaH_2$ by means of distillation. Irrespective of the drying agent applied, distillation has to be carried out under protecting atmosphere (e.g. nitrogen or argon), in order to prevent the dried γ-butyrolactone (I) from taking up of air moisture.

Preferably, the γ-butyrolactone provided in step (a2) has a water content of 0.1 wt% or lower, preferably 0.05% or lower, and most preferably 0.01% or lower, as measured at 20 °C by Karl-Fischer-titration. Said low water content may be achieved by applying a drying agent, preferably one of the above-mentioned preferred drying agents.

In certain cases, it is preferred that the above defined process for the synthesis of poly-4-hydroxybutyrate further comprises the step of

(c) quenching the ring-opening polymerization by adding a quenching solution comprising one or more acids and one or more solvents to the reaction mixture.

By means of quenching, the base (i) is neutralized. Without quenching, there is a risk of decomposition of the obtained poly-4-hydroxybutyrate when it is isolated from the reaction mixture at ambient temperature.

In the quenching solution added in step (c), the acid or one or more of the acids is preferably selected from the group consisting of hydrohalogenic acids, oxo-acids of Cl, S, N, P and B, alkylsulfonic acids, arylsulfonic acids, mono-, di- and tri-functional carboxylic acids. Said mono-, di- and tri-functional carboxylic acids include hydroxy-functionalized mono-, di- and tri-functional carboxylic acids and unsaturated mono-, di- and tri-functional carboxylic acids.

Most preferably, in the quenching solution added in step (c), each acid is selected from the group consisting of hydrohalogenic acids, oxo-acids of Cl, S, N, P and B, alkyl-sulfonic acids, arylsulfonic acids, mono-, di- and tri-functional carboxylic acids as defined above.

Most preferred acids are those selected from the group consisting of hydrochloric acid HCl, perchloric acid $HClO_4$, nitric acid $HNO_3$, sulfuric acid $H_2SO_4$, phosphoric acid $H_3PO_4$, boric acid $B(OH)_3$, formic acid, acetic acid, acrylic acid, oxalic acid, propionic acid, lactic acid, citric acid, methanesulfonic acid and toluenesulfonic acid.

The quenching solution added in step (c) comprises one or more solvents. Suitable solvents are those in which poly-4-hydroxybutyrate is soluble.

In the quenching solution, the solvent or one or more of the solvents are preferably selected from the group consisting of halogenated aliphatic and aromatic hydrocarbons, ketones, ethers, dialkylcarbonates and dialkylsulfoxides. Most preferably, in the quenching solution added in step (c) each solvent is selected from the group consisting of halogenated aliphatic and aromatic hydrocarbons, ketones, ethers, dialkylcarbonates and dialkylsulfoxides.

As used herein, the term "hydrocarbons" is intended to include halogenated hydrocarbons.

Most preferred solvents are those selected from the group consisting of trichloromethane, deuterotrichloromethane ($CDCl_3$), 1,2-dichlorethan, 1,1,2,2-terachlorethane, chlorobenzene, 1,4-dioxane, anisole, dimethylether, acetone, acetophenone, dihydrolevoglucosenon, dimethylcarbonate, diethylcarbonate, dimethylsulfoxide and acetonitrile.

Said quenching solution added in step (c) preferably has a temperature in the range of from -25°C to 20°C.

In the quenching solution, the total concentration of acids is preferable in the range of from 0.001 mol/l to 1 mol/L, preferably in the range from 0.016 mol/L to 0.081 mol/L.

In step (c), the quenching solution is preferably added in such amount that the concentration of acid provided by the quenching solution corresponds to an amount of 1 to 50 equivalents of acid for 1 equivalent of base, preferably in the range from 4 to 20 equivalents of acid for 1 equivalent of base.

Work-up of the reaction mixture and isolation of the produced poly-4-hydroxybutyrate can be affected in any customary manner, for example by means of filtration or aqueous extractive work-up, precipitation, distillative removal of the solvent or by means of a combination of some or all of these steps such as first hydrolytic work-up to remove the alkaline base and the initiator followed by removal of the organic solvent and unreacted γ-butyrolactone (I) from the organic phase by evaporation or distillation. The poly-4-hydroxybutyrate is generally obtained in sufficient purity by applying such measures or a combination thereof, rendering additional purification steps unnecessary.

The reaction can be performed continuously, semi-continuously or discontinuously. The reaction can be performed in all reactors known to a person skilled in the art which are suitable for this type of reaction. Suitable reactors are described and reviewed in the relevant literature, e. g. K. Henkel, "Reactor Types and Their Industrial Applications", Ullmann's Encyclopedia of Industrial Chemistry, 2005, Wiley-VCH Verlag GmbH & Co. KGaA, chapter 3.3: "Reactors for gas-liquid reactions".

An especially preferred process for the synthesis of poly-4-hydroxybutyrate comprises the steps of

(a) preparing a reaction mixture by

(a1) forming a premix comprising

(i) one or more bases selected from the group consisting of lithium tertbutoxide, sodium tertbutoxide, potassium tertbutoxide and potassium benzylalcoholate
and

(ii) one or more alcohols selected from the group consisting of methanol, ethanol, polyethyleneglycol, 1,4-butanediol, 1,6-hexanediol, benzylic alcohol, 1,4-benzenedimethanol, 2,6-dichlorobenzylalcohol, 4-methylbenzylalcohol and 2,4,6-trimethylbenzylalcohol,

(a2) providing γ-butyrolactone (I) having a temperature in the range of from -25°C to -10°C and a water content of 0.1 wt% or lower, wherein preferably the γ-butyrolactone (I) is dried by means of one or more oxazolidines of formula (III), (IV) or (V) as defined above

(a3) forming a reaction mixture by charging the premix formed in step (a1) into the γ-butyrolactone provided in step (a2)

wherein in the reaction mixture

- the molar ratio of γ-butyrolactone to the total amount of above-defined bases (i) is in the range of from 200 : 1 to 400 :1
and

- the molar ratio of the total amount of above-defined bases (i) to the total amount of above-defined

alcohols (ii) is in the range of from 1 : 1 to 1 : 8

wherein the reaction mixture further comprises a solvent selected from the group consisting of dichloromethane, toluene, 2-methyl-tetrahydrofurane, 1,4-dioxane, glyme, diglyme, ethyl acetate, dimethylformamide, dimethylsulfoxide and acetonitrile and mixtures thereof

(b) chemically converting the γ-butyrolactone in the reaction mixture by ring opening-polymerization to poly-4-hydroxybutyrate at a temperature in the range of from -25°C to -10°C

(c) quenching the ring-opening polymerization by adding a quenching solution to the reaction mixture,

said quenching solution comprising an acid selected from the group consisting of hydrochloric acid HCl, perchloric acid $HClO_4$, nitric acid $HNO_3$, sulfuric acid $H_2SO_4$, phosphoric acid $H_3PO_4$, boric acid $B(OH)_3$, formic acid, acetic acid, acrylic acid, oxalic acid, propionic acid, lactic acid, citric acid, methanesulfonic acid, and toluenesulfonic acid

dissolved in a solvent selected from the group consisting of trichloromethane, deuterotrichloromethane ($CDCl_3$), 1,2-dichlorethan, 1,1,2,2-terachlorethane, chlorobenzene, 1,4-dioxane, anisole, dimethylether, acetone, acetophenone, dihydrolevoglucosenon, dimethylcarbonate, diethylcarbonate, dimethylsulfoxide, acetonitrile and mixtures thereof,

said quenching solution having a temperature in the range of from -25°C to 20°C.

In specific preferred processes according to the invention, the base (i) is potassium tertbutoxide, and the alcohol (ii) is selected from the group consisting of benzylic alcohol, polyethyleneglycol, 1,4-butanediol, 1,6-hexanediol, benzylic alcohol, 1,4-benzenedimethanol, 4-methylbenzylalcohol and 2,4,6-trimethylbenzylalcohol.

In other specific preferred processes according to the invention, the base (i) is potassium benzylalcoholate, and the alcohol (ii) is selected from the group consisting of benzylic alcohol, polyethyleneglycol, 1,4-butanediol, 1,6-hexanediol, benzylic alcohol, 1,4-benzenedimethanol, 4-methylbenzylalcohol and 2,4,6-trimethylbenzylalcohol.

In a further aspect, there is disclosed the use of a kit comprising

(i) one or more bases comprising an alkaline metal cation

(ii) one or more alcohols

in a process for the synthesis of poly-4-hydroxybutyrate as defined above.

Specific and preferred bases (i) comprising an alkaline metal cation are as mentioned above. Specific and preferred alcohols (ii) are as mentioned above. Specific and preferred combinations of bases (i) comprising an alkaline metal cation and alcohols (ii) are as mentioned above. Preferably, the kit is used in one of the above-defined specific and preferred processes for the synthesis of poly-4-hydroxybutyrate.

In a further aspect, there is disclosed poly-4-hydroxybutyrate obtainable by the above-defined process. Preferably, the poly-4-hydroxybutyrate is obtainable by one of the above-defined specific and preferred processes.

Poly-4-hydroxybutyrate obtainable by the above-defined process preferably have one or more of the following properties

- a number-average molecular weight (Mn) determined by gel permeation chromatography (GPC) in the range of from 4000 g/mol to 10000 g/mol
- a weight-average molecular weight (Mw) determined by gel permeation chromatography (GPC) in the range of from 6000 g/mol to 16000 g/mol
- a molecular weight distribution (Đ) (Mw/Mn) determined by gel permeation chromatography (GPC) in the range of from 1.4 to 2.0
- a decomposition onset temperature (T5%) determined by thermogravimetric analysis (TGA) in the range of from 220 °C to 250 °C
- a glass transition temperature (Tg) determined by differential scanning calorimetry in the range of from -40 °C to -60 °C

- a crystallization temperature (Tc) determined by differential scanning calorimetry in the range of from 10 °C to 20°C
- a melting temperature (Tm) determined by differential scanning calorimetry in the range of from 50°C to 60°C.

Methods for determining the above-mentioned parameters are known in the art. For details, see the examples section.

Preferred poly-4-hydroxybutyrates obtainable by the above-defined process are soluble in one or more solvents selected from the group consisting of tetrahydrofurane, 2-methyl tetrahydrofurane, acetone, acetonitrile, dichloromethane, dimethyl sulfoxide (=DMSO), chlorobenzene, chloroform, 1,2-dichloroethane, 1,1,2,2-tetrachloroethane, dimethyl formamide, ethyl acetate, γ-butyrolactone (=GBL), dimethyl carbonate, diethyl carbonate, dimethoxyethane (=glyme), dihydrolevoglucosenon (=cyrene), and toluene.

Potential applications of poly-4-hydroxybutyrate obtainable by the above-defined process include the manufacture of fibers suitable for reinforcing a matrix made of another polymer, i.e. fibers for forming a fiber-reinforced polymer. Such polymer reinforced by fibers made from poly-4-hydroxybutyrate has advantages with regard to recyclability, because the reinforcement fibers could easily be removed by depolymerizing the poly-4-hydroxybutyrate and distilling the resulting γ-butyrolactone from the melt of the matrix polymer, thus obtaining γ-butyrolactone as a reusable monomer, and the fiber-free matrix polymer.

Further application fields of poly-4-hydroxybutyrate obtainable by the above-defined process relate to adhesives, e. g. hotmelt adhesives or compostable adhesives, or encapsulation of crop protection products.

The polymers of the present invention can be used in seed treatment compositions and methods of treating seed. Thus, the present invention also relates to the use of these polymers in seed treatment compositions. Seed treatment is the process of applying active ingredients to seeds in order to support the germination and/or the growth. Seed treatment is applicable to a large variety of crops. Typical examples include the application of pesticides such as fungicides, insecticides and plant growth regulators, as well as other active ingredients such as fertilizers.

Poly-4-hydroxybutyrate obtainable by the above-defined process can be used in the form of a blend with one or more other polymers, this way increasing the content of renewables in the final part.

Besides these applications, poly-4-hydroxybutyrate obtainable by the above-defined process can be used as intermediate for the preparation of other polymers or elastomers, e.g. for home-care or cosmetic applications or for technical polymers such as polyurethanes.

Especially bifunctional poly-4-hydroxybutyrates obtainable by the above-defined process can be used for the preparation of

- thermoplastic polyurethanes, e.g. for extrusion applications, preferably for an extruded article, more preferably an extruded article selected from the group consisting of cable jacketing, tube and hose, injection molding applications, preferably for an injection molded article, more preferably for an injection molded article selected from the group consisting of roller, gasket, seal, railway pad, and conveyor belt, preferably with improved compression set, with improved thermal resistance and creep performance,
- polyurethane foams
- cast elastomers
- thermoplastic copolyesters and further specialty polymers.

Poly-4-hydroxybutyrate obtainable by the above-defined process can also be used as binder in coating applications such as

- conventional base coats,
- water based coats,
- liquid base coats, which are essentially solvent- and water-free (so called 100% systems),
- solid water-free base coats such as powder coatings and pigmented powder coatings,
- solvent-free, possibly pigmented powder coating dispersions such as powder slurry base coats.

Such coatings can be hardened by thermal treatment, by radiation, or by a dual cure hardening process. They are

self-crosslinking or are crosslinked by external crosslinking agents.

These coatings are suitable for coating substrates like wood, paper, textiles, leather, nonwovens, plastics, glass, ceramics, mineral products, e. g. for construction, such as cement stones or fiber-cement boards, and especially metals or coated metals.

The coating process is performed according to processes known in the art, whereby at least a coating according to the invention, i.e. containing poly-4-hydroxybutyrate obtainable by the above-defined process, is applied on a substrate in the desired thickness, and then volatile components are removed. This process can be repeated once or multiple times if desired. Application of the coating on a substrate can be done according to known processes such as spraying, stopping, coating with a doctor knife, brushing, rolling, or casting. Strength of coating is typically from 3 to 1000 $g/m^2$ and preferably 10 to 200 $g/m^2$.

Poly-4-hydroxybutyrates obtainable by the above-defined process can also be used in the production of printing inks or printed coatings, being used as additives such as dispersing aids, stabilizers, or bonding agents. A preferred application is the use as binder for printing inks or printed coatings.

Furthermore, poly-4-hydroxybutyrates obtainable by the above-defined process can also be used in cosmetic and dermatological formulations as rheology modifiers, especially as thickeners, especially as oil thickening polymers suitable for cosmetic applications.

Examples:

The following examples are meant to further explain and illustrate the present invention without limiting its scope.

Test of different bases (i) and alcohol initiators (ii) (examples 1-20)

Preparation 6.5 mmol scale (examples 4-7, 12-14, cf. table 1):

The ring-opening-polymerization of γ-butyrolactone (GBL) was performed in a sealed 10 mL vial. In an Argon filled glovebox, the 10 mL vial was charged with GBL (500 μL, 6.50 mmol, 1.0 eq) and sealed with a septum. A separate 1 mL vial was charged with the base indicated in table 1 (0.125 mol% to 0.5 mol% relative to GBL, cf. table 1) followed by the solvent 2-MeTHF (65 μL, resulting in a concentration of GBL of 100 M in the reaction mixture to be formed) and the alcohol initiator indicated in table 1 (0.5 mol% to 1.0 mol% relative to GBL, cf. table 1) and sealed (step (a1)). The obtained premix Base/Initiator/Solvent was homogenized for 5 min. If the solid constituents of the premix were not completely solubilized, the premix was used as a suspension. The vials were taken out of the glovebox. The vial containing the GBL was immersed in the cooling bath at -20 °C (step (a2)). After 30 min equilibration at the desired temperature, a reaction mixture was formed (step (a3)) and the ring-opening polymerization of GBL (step (b)) was initiated by dropwise addition of the premix Base/Initiator/Solvent via a gastight syringe. After 4 hours resp. 14 hours (as indicated in table 1) at -20 °C, the polymerization was quenched (step (c)) by addition of 4 mL of a cold (-20 °C) acetic acid/$CHCl_3$ (5 μL/mL) solution, until the precipitated polymer was redissolved at -20 °C. The quenched reaction mixture was analyzed by $^1$H-NMR to obtain the percentage of converted monomer and yield.

Preparation 130 mmol scale (examples 1-3, 8-11, 15-20, cf. table 1):

The ring-opening polymerization of γ-butyrolactone was performed in a flame-dried 100 mL round bottom flask. In an Argon filled glovebox, the flask was charged with GBL (10 mL, 130 mmol, 1.0 eq) and sealed with a septum. A separate 4 mL vial was charged with the base indicated in table 1 (0.125 mol% to 0.25 mol% relative to GBL, cf. table 1) followed by the solvent 2-MeTHF (1.3 mL, resulting in a concentration of GBL of 100 M in the reaction mixture to be formed) and the alcohol initiator indicated in table 1 (0.5 mol% to 1.0 mol%, relative to GBL, cf. table 1) and sealed (step (a1)). The obtained premix Base/Initiator/Solvent was homogenized for 5 min. If the solid constituents of the premix were not completely solubilized, the premix was used as a suspension. The reactor and the vial were taken out of the glovebox. The round bottom flask was immersed in the cooling bath at -20°C (step (a2)). After 40 min equilibration at the desired temperature, a reaction mixture was formed (step (a3)) and the ring-opening polymerization of GBL (step (b)) was initiated by dropwise addition of the premix Base/Initiator/Solvent via a gastight syringe. After 4 hours resp. 24 hours (as indicated in table 1) at -20°C, the polymerization (step (c)) was quenched by addition of 40 mL of a cold (-20 °C) acetic acid/DCM (5 μL/mL) solution, until the precipitated polymer was redissolved at -20°C. The quenched reaction mixture was washed with distilled water (3 x 100 mL) and then the volatile constituents were evaporated using a rotative evaporator (at 35 °C until 20 mbar was reached). The remaining viscous liquid was precipitated using cold MeOH:$H_2O$ 9:1, filtered, washed with cold MeOH:$H_2O$ 9:1 and dried under high vacuum (0.1 mbar) for 24 hours.

Table 1

| Example | Initiator (I) /Base (B) | Mol Ratio GBL / I / B | Scale (mmol) | t (h) | T (°C) | Solvent | Yield (%)[a] | $M_n$ (g/mol)[d] | $M_n$ (g/mol)[e] | $M_w$ (g/mol)[e] | Đ ($M_w/M_n$)[e] |
|---|---|---|---|---|---|---|---|---|---|---|---|
| 1 | BnOH/*t*BuOK | 1400 / 4 / 1 | 130 | 4 | -20 | 2-MeTHF | 92[b] | 8050 | 9310e | 15330e | 1.65e |
| 2 | BnOH/*t*BuOK[c] | 400 / 4 /1 | 130 | 4 | -20 | 2-MeTHF | 94[b] | 8002 | 10430e | 15750e | 1.51e |
| 3 | BnOH/*t*BuOK | 800 / 4 /1 | 130 | 4 | -20 | 2-MeTHF | 52[b] | 8647 | 10670e | 17230e | 1.61e |
| 4 | BnOH/*t*BuOK | 400 / 4 /1 | 6.5 | 4 | -20 | 2-MeTHF | 70 | N.D. | N.D. | N.D. | N.D. |
| 5 | BnOH/*t*BuOK | 400 / 4 /1 | 6.5 | 14 | -20 | 2-MeTHF | 75 | N.D. | N.D. | N.D. | N.D. |
| 6 | BnOH/*t*BuOK | 800 / 4 / 1 | 6.5 | 14 | -20 | 2-MeTHF | 69 | N.D. | N.D. | N.D. | N.D. |
| 7 | BnOH/BnOK | 400 / 4 /1 | 6.5 | 4 | -20 | 2-MeTHF | 64 | N.D. | N.D. | N.D. | N.D. |
| 8 | BnOH/*t*BuONa | 400 / 4 / 1 | 130 | 4 | -20 | 2-MeTHF | 61[b] | 6506 | N.D. | N.D. | N.D. |
| 9 | BnOH/*t*BuOLi | 400 / 4 / 1 | 130 | 4 | -20 | 2-MeTHF | 12[b] | 2905 | N.D. | N.D. | N.D. |
| 10 | 1,4-benzenedimethanol (BDM) /*t*BuOK | 400 / 4 / 1 | 130 | 4 | -20 | 2-MeTHF | 54[b] | 9684 | 9640e | 15300e | 1.58e |
| 11 | 1,4-BDM/*t*BuOK | 800 / 4 / 1 | 130 | 24 | -20 | 2-MeTHF | 41[b] | 7027 | N.D. | N.D. | N.D. |
| 12 | 1,4-BDM/*t*BuOK | 400 / 2 / 1 | 6.5 | 4 | -20 | 2-MeTHF | 27 | N.D. | N.D. | N.D. | N.D. |
| 13 | 1,4-BDM/*t*BuOK | 200 / 2 / 1 | 6.5 | 4 | -20 | 2-MeTHF | 36 | N.D. | N.D. | N.D. | N.D. |
| 14 | 1,4-BDM/*t*BuOK | 400 / 4 /1 | 6.5 | 4 | -20 | 2-MeTHF | 41 | N.D. | N.D. | N.D. | N.D. |
| 15 | 1,4-butanediol/*t*BuOK | 400 / 1 / 1 | 130 | 4 | -20 | 2-MeTHF | 40[b] | 3198 | 3950e | 5420e | 1.37e |
| 16 | 1,6-hexanediol/*t*BuOK | 400 / 2 / 1 | 130 | 4 | -20 | 2-MeTHF | 42[b] | 8648 | 8650e | 13590e | 1.51e |
| 17 | MeOH/*t*BuOK | 400 / 4 / 1 | 130 | 4 | -20 | 2-MeTHF | 71[b] | 11110 | N.D. | N.D. | N.D. |
| 18 | 4-Me-$C_6H_4CH_2OH$/*t*BuOK | 400 / 4 /1 | 130 | 4 | -20 | 2-MeTHF | 76[b] | 6400 | N.D. | N.D. | N.D. |
| 19 | 2,6-Cl-$C_6H_3CH_2OH$/*t*BuOK | 400 / 4 / 1 | 130 | 4 | -20 | 2-MeTHF | 89[b] | 8579 | N.D. | N.D. | N.D. |

(continued)

| Example | Initiator (I) /Base (B) | Mol Ratio GBL / I / B | Scale (mmol) | t (h) | T (°C) | Solvent | Yield (%)[a] | $M_n$ (g/mol)[d] | $M_n$ (g/mol)[e] | $M_w$ (g/mol)[e] | Đ ($M_w/M_n$)[e] |
|---|---|---|---|---|---|---|---|---|---|---|---|
| 20 | 2,4,6-Me-$C_6H_2CH_2OH$/ *t*BuOK | 400 / 4 /1 | 130 | 4 | -20 | 2-MeTHF | 83[b] | 6821 | 9080[e] | 13640[e] | 1.50[e] |

[a] Determined by $^1$H-NMR using hexamethyldisiloxane as internal standard;
[b] Isolated yield;
[c] Potassium *tert*-butoxide, 2 M (25 % w/w)-Solution in 2-MeTHF;
[d] $M_n$ (number-average molar mass in g/mol) was determined by $^1$H-NMR of the pure polymer by comparing the integration of the signal from the initiator benzyl alcohol [5.12 ppm], 1,4-BDM [5.09 ppm], 1,4-BDO [3.66 ppm], 1,6-HDO [3.66 ppm], MeOH [3.47 ppm] as A, with the $CH_2$ signal from the poly-4-hydroxybutyrate at 4.12 ppm as B. $M_n$ was calculated the following equation, protons are written $N_A$ and $N_B$ for A and B:

$$\mathbf{M_n = ((B/N_B)/(A/N_A))*Mw(\gamma\text{-butyrolactone})+Mw(initiator)}.$$

[e] determined from GPC in THF
Note: The $M_n$ values determined by NMR usually differ from the $M_n$ values determined via GPC. As known by the skilled person, GPC gives relative values depending on the applied standard.
"N.D." means that the parameter was not determined.

Test of different solvents for the reaction mixture

Preparation 6.5 mmol scale (examples 4 and 21-29):

The ring-opening-polymerization of γ-butyrolactone (GBL) was performed in a sealed 10 mL vial. In an Argon filled glovebox, the 10 mL vial was charged with GBL (500 μL, 6.50 mmol, 1.0 eq) and sealed with a septum. A separate 1 mL vial was charged with the base potassium tert-butoxide (0.25 mol% relative to GBL) followed by the solvent indicated in table 2 (65 μL, resulting in a concentration of GBL of 100 M in the reaction mixture to be formed) and the initiator benzyl alcohol (1.0 mol% relative to GBL) and sealed (step (a1)). The obtained premix Base/Initiator/Solvent was homogenized for 5 min. If the solid constituents of the premix were not completely solubilized, the premix was used as a suspension. The vials were taken out of the glovebox. The vial containing the GBL was immersed in the cooling bath at -20 °C (step (a2)). After 30 min equilibration at the desired temperature, a reaction mixture was formed (step (a3)) and the ring-opening polymerization of GBL (step (b)) was initiated by dropwise addition of the premix Base/Initiator/Solvent via a gastight syringe. After 4 hours resp. 14 hours (as indicated in table 2) at -20 °C, the polymerization was quenched (step (c)) by addition of 4 mL of a cold (-20 °C) acetic acid/$CHCl_3$ (5 μL/mL) solution, until the precipitated polymer was redissolved at -20 °C. The quenched reaction mixture was analyzed by $^1$H-NMR to obtain the percentage of converted monomer and yield.

Table 2

| Example | Initiator (I) / Base (B) | Mol Ratio GBL / I / B | Scale (mmol) | t (h) | T (°C) | Solvent | Yield (%)[a] |
|---|---|---|---|---|---|---|---|
| 4 | BnOH/*t*BuOK | 400 / 4 / 1 | 6.5 | 4 | -20 | 2-MeTHF | 70 |
| 21 | BnOH/*t*BuOK | 400 / 4 / 1 | 6.5 | 4 | -20 | $CH_2Cl_2$ | 50 |
| 22 | BnOH/*t*BuOK | 400 / 4 / 1 | 6.5 | 4 | -20 | 1,4-Dioxane | 54 |
| 23 | BnOH/*t*BuOK | 400 / 4 / 1 | 6.5 | 4 | -20 | EtOAc | 83 |
| 24 | BnOH/*t*BuOK | 400 / 4 / 1 | 6.5 | 4 | -20 | Toluene | 66 |
| 25 | BnOH/*t*BuOK | 400 / 4 / 1 | 6.5 | 4 | -20 | DMSO | 26 |
| 26 | BnOH/*t*BuOK | 400 / 4 / 1 | 6.5 | 4 | -20 | DMF | 36 |
| 27 | BnOH/*t*BuOK | 400 / 4 / 1 | 6.5 | 4 | -20 | Glyme | 50 |
| 28 | BnOH/*t*BuOK | 400 / 4 / 1 | 6.5 | 4 | -20 | Diglyme | 56 |
| 29 | BnOH/*t*BuOK | 400 / 4 / 1 | 6.5 | 4 | -20 | Acetonitrile | 22 |
| [a] Determined by $^1$H-NMR using hexamethyldisiloxane as internal standard. | | | | | | | |

Preparation 6.5 mmol scale (examples 30-32, cf. table 3):

The ring-opening polymerization of γ-butyrolactone (GBL) was performed in a sealed 10 mL vial. In an Argon filled glovebox, the 10 mL vial was charged with GBL (500 μL, 6.50 mmol, 1.0 eq) and sealed with a septum. A separate 1 mL vial was charged with the base potassium *tert*-butoxide (0.25 mol% relative to GBL) followed by the solvent indicated in table 3 (65 μL, resulting in a concentration of GBL of 100 M in the reaction mixture to be formed) and (except for example 30, which is a comparison example) the initiator indicated in table 3 (1 mol% relative to GBL) and sealed (step (a1)). The obtained premix Base/Initiator/Solvent was homogenized for 5 min. The vials were taken out of the glovebox. The vial containing the GBL was immersed in the cooling bath at -20 °C (step (a2)). After 30 min equilibration at the desired temperature, a reaction mixture was formed (step (a3)) and the ring-opening polymerization of GBL (step (b)) was initiated by dropwise addition of the premix Base/Initiator/Solvent via a gastight syringe. After 4 hours at -20 °C, the polymerization was quenched (step (c)) by addition of 4 mL of a cold (-20 °C) acetic acid/$CHCl_3$ (5 μL/mL) solution, until the precipitated polymer was redissolved at -20 °C. The quenched reaction mixture was analyzed by $^1$H-NMR to obtain the percentage of converted monomer and yield.

Preparation 130 mmol scale (example 33, cf. table 3):

The ring-opening polymerization of γ-butyrolactone (GBL) was performed in a flame-dried 100 mL round bottom flask. In an Argon filled glovebox, the flask was charged with GBL (10 mL, 130 mmol, 1.0 eq) and sealed with a septum. A separate 4 mL vial was charged with the base potassium *tert*-butoxide (0.25 mol% relative to GBL) followed by the solvent

ethyl acetate (1.3 mL, resulting in a concentration of GBL of 100 M in the reaction mixture to be formed) and the initiator benzyl alcohol (1.0 mol% relative to GBL) and sealed (step (a1)). The obtained premix Base/Initiator/Solvent was homogenized for 5 min. The reactor and the vial were taken out of the glovebox. The round bottom flask was immersed in the cooling bath at -20 °C (step (a2)). After 40 min equilibration at the desired temperature, a reaction mixture was formed (step (a3)) and the ring-opening polymerization of GBL (step (b)) was initiated by dropwise addition of the premix Base/Initiator/Solvent via a gastight syringe. After 4 hours at -20 °C, the polymerization was quenched (step (c)) by addition of 40 mL of a cold (-20 °C) acetic acid/DCM (5 μL/mL) solution, until the precipitated polymer was redissolved at -20 °C. The quenched reaction mixture was washed with distilled water (3 x 100 mL) and then the volatile constituents were evaporated using a rotative evaporator (at 35 °C until 20 mbar was reached). The remaining viscous liquid was precipitated using cold MeOH:$H_2O$ 9:1, filtered, washed with cold MeOH:$H_2O$ 9:1 and dried under high vacuum (0.1 mbar) for 24 hours.

Table 3

| Example | Initiator (I) / Base (B) | Mol Ratio GBL / I / B | Scale (mmol) | t (h) | T (°C) | Solvent | Yield (%)[a] |
|---|---|---|---|---|---|---|---|
| 30 | tBuOK | 400 / 0 / 1 | 6.5 | 4 | -20 | EtOAc | 34 |
| 31 | EtOH/*t*BuOK | 400 / 4 / 1 | 6.5 | 4 | -20 | EtOAc | 40 |
| 32 | BnOH/EtOAc/*t*BuOK | 400 / 4 / 4 / 1 | 6.5 | 4 | -20 | 2-MeTHF | 67 |
| 33 | BnOH/*t*BuOK | 400 / 4 / 1 | 130 | 4 | -20 | EtOAc | 80[b] |

[a] Determined by $^1$H-NMR using hexamethyldisiloxane as internal standard;
[b] Isolated yield

Test of different solvents for quenching in step (c) (examples 4 and 34-47)

Preparation 6.5 mmol scale (examples 4, 34-39 and 41-47, cf. table 4):

The ring-opening polymerization of γ-butyrolactone (GBL) was performed in a sealed 10 mL vial. In an Argon filled glovebox, the 10 mL vial was charged with GBL (500 μL, 6.50 mmol) and sealed with a septum. A separate 1 mL vial was charged with the base potassium tert-butoxide (1.83 mg, 0.016 mmol) followed by the solvent 2-MeTHF (65.0 μL, resulting in a concentration of GBL of 100 M in the reaction mixture to be formed) and the initiator benzyl alcohol (6.7 μL, 0.065 mmol), and sealed (step (a1)). The obtained premix Base/Initiator/2-MeTHF was homogenized for 5 min. The vials were taken out of the glovebox. The vial containing the GBL was immersed in the cooling bath at -20 °C (step (a2)). After 30 min equilibration at the desired temperature, a reaction mixture was formed (step (a3)) and the ring-opening polymerization of GBL (step (b)) was initiated by dropwise addition of the premix Base/Initiator/2-MeTHF via a gastight syringe. After 4 hours at -20°C, the polymerization was quenched (step (c)) by addition of a cold (-20 °C) quenching solution comprising acetic acid (acid concentration 5 mol% relative to GBL) in 4 mL of the solvent indicated in table 4 , until the precipitated polymer was redissolved at -20 °C. If the polymer did not redissolve at -20°C, the reaction mixture was warmed up to +22 °C. The quenched reaction mixture was analyzed by $^1$H-NMR to obtain the percentage of converted monomer and yield.

Preparation 130 mmol scale (example 40, cf. table 4):

The ring-opening polymerization of γ-butyrolactone was performed in a flame-dried 100 mL round bottom flask. In an Argon filled glovebox, the flask was charged with γ-butyrolactone (10 mL, 130 mmol, 1.0 eq) and sealed with a septum. A separate 4 mL vial was charged with the base potassium *tert*-butoxide (0.25 mol% relative to GBL) followed by the solvent 2-MeTHF (1.3 mL, resulting in a concentration of GBL of 100 M in the reaction mixture to be formed) and the initiator benzyl alcohol (1.0 mol% relative to GBL), and sealed (step (a1)). The premix Base/Initiator/Solvent was homogenized for 5 min. The reactor (i.e. the flask) and the vial were taken out of the glovebox. The round bottom flask was immersed in the cooling bath at -20 °C (step (a2)). After 40 min equilibration at the desired temperature, a reaction mixture was formed (step (a3)) and the ring-opening polymerization of GBL (step (b)) was initiated by dropwise addition of the premix Base/Initiator/Solvent via a gastight syringe. After 4 hours at -20 °C, the polymerization was quenched (step (c)) by addition of 40 mL of a cold (-20 °C) acetic acid/acetone (5 μL/mL) solution and warmed to +22 °C until the polymer was redissolved. The quenched reaction mixture was washed with distilled water (3 x 100 mL) and then the volatile constituents were evaporated using a rotative evaporator (at 35 °C until 20 mbar was reached). The remaining viscous liquid was precipitated using cold MeOH:$H_2O$ 9:1, filtered, washed with cold MeOH:$H_2O$ 9:1 and dried under high vacuum (0.1 mbar) for 24 hours.

Table 4

| Example | Solvent for quenching | Scale (mmol) | Yield[a] |
|---|---|---|---|
| 4 | $CHCl_3$ | 6.5 | 70 |
| 34 | Acetophenone | 6.5 | 18 |
| 35 | dihydrolevoglucosenon | 6.5 | 21 |
| 36 | Anisole | 6.5 | 26 |
| 37 | 1,4-dioxane | 6.5 | 31 |
| 38 | DME | 6.5 | 32 |
| 39 | Acetone | 6.5 | 41 |
| 40 | Acetone | 130 | 65[b], $M_n$=8524 Da[c] |
| 41 | $(MeO)_2CO$ | 6.5 | 45 |
| 42 | DMSO | 6.5 | 50 |
| 43 | $(EtO)_2CO$ | 6.5 | 51 |
| 44 | Chlorobenzene | 6.5 | 53 |
| 45 | Acetonitrile | 6.5 | 54 |
| 46 | 1,2-DCE[d] | 6.5 | 68 |
| 47 | 1,1,2,2-TCE[e] | 6.5 | 69 |

[a] Determined by $^1$H-NMR using hexamethyldisiloxane as internal standard;
[b] Isolated yield;
[c] $\mathbf{M_n}$ (number-average molar mass in Da) was determined by $^1$H-NMR of the pure polymer by comparing the integration of the $CH_2$ signal from the benzyl alcohol at 5.12 ppm A, with the $CH_2$ signal from the poly-4-hydroxybutyrate at 4.12 ppm B, due to the presence of only 1 benzyl alcohol molecule per polymer chain. $\mathbf{M_n}$ was calculated the following equation, protons are not taken into account here as two $CH_2$ are being compared: **$M_n$ = (B/A)*Mw(γ-butyrolactone) +Mw(benzyl alcohol)**
[d] 1,2-DCE = 1,2-dichloroethane
[e] 1,1,2,2-TCE = 1,1,2,2-tetrachloroethane

Test of different acids for quenching in step (c) (examples 4 and 48-61)

Preparation 6.5 mmol scale (examples 4 and 48-61, cf. table 5):

The ring-opening polymerization of γ-butyrolactone (GBL) was performed in a sealed 10 mL vial. In an Argon filled glovebox, the 10 mL-vial was charged with GBL (500 µL, 6.50 mmol) and sealed with a septum. A separate 1 mL vial was charged with the base potassium tert-butoxide (1.83 mg, 0.016 mmol) followed by the solvent 2-MeTHF (65.0 µL, resulting in a concentration of GBL of 100 M in the reaction mixture to be formed) and the initiator benzyl alcohol (6.7 µL, 0.065 mmol) and sealed (step (a1)). The obtained premix Base/Initiator/2-MeTHF was homogenized for 5 min. The vials were taken out of the glovebox. The vial containing the GBL was immersed in the cooling bath at -20 °C (step (a2)). After 30 min equilibration at the desired temperature, a reaction mixture was formed (step (a3)) and the ring-opening polymerization of GBL (step (b)) was initiated by dropwise addition of the premix Base/Initiator/2-MeTHF via a gastight syringe. After 4 hours at -20 °C, the polymerization was quenched (step (c)) by addition of 4 mL of cold (-20 °C) quenching solution comprising the acid indicated in table 5 (acid concentration 1-5 mol% relative to GBL) in 4 mL of the solvent indicated in table 5 until the precipitated polymer was redissolved at -20 °C. If the polymer did not redissolve at -20 °C, the reaction mixture was warmed up to +22 °C. The quenched reaction mixture was analyzed by $^1$H-NMR to obtain the percentage of converted monomer and yield.

Table 5

| Example | Solvent for quenching | Acid for quenching | Amount of acid relative to tBuOK | pKa in $H_2O$ | Yield[a] |
|---|---|---|---|---|---|
| 4 | $CHCl_3$ | AcOH 98% | 20 eq | +4.75 | 70 |

(continued)

| Example | Solvent for quenching | Acid for quenching | Amount of acid relative to tBuOK | pKa in $H_2O$ | Yield[a] |
|---|---|---|---|---|---|
| 48 | $CDCl_3$/Acetone, 4:1 | $HClO_4$ 70% | 12 eq | -10 | 14 |
| 49 | $CDCl_3$/Acetone, 4:1 | $H_2SO_4$ 98% | 4 eq | -3.0 | 32 |
| 50 | $CDCl_3$/Acetone, 4:1 | $MeSO_3H$ | 12 eq | -2.6 | 29 |
| 51 | $CDCl_3$ | pTSA | 12 eq | -2.1 | 64 |
| 52 | $CDCl_3$/Acetone, 4:1 | HCl 37% | 12 eq | -1.1 | 54 |
| 53 | $CDCl_3$/Acetone, 4:1 | $HNO_3$ 70% | 12 eq | -1.3 | 66 |
| 54 | $CDCl_3$/Acetone, 1 : 1 | oxalic acid 80% (in $H_2O$) | 12 eq | +1.27 | 56 |
| 55 | $CDCl_3$/Acetone, 1 : 1 | $H_3PO_4$ 85% (in $H_2O$) | 12 eq | +2.12 | 55 |
| 56 | $CDCl_3$/Acetone, 2 : 3 | citric acid 40% (in $H_2O$) | 12 eq | +3.1 | 51 |
| 57 | $CDCl_3$/Acetone, 4 : 1 | formic acid 85% (in $H_2O$) | 12 eq | +3.75 | 66 |
| 58 | $CDCl_3$/Acetone, 4:1 | lactic acid 85% (in $H_2O$) | 12 eq | +3.86 | 66 |
| 59 | $CDCl_3$/Acetone, 4:1 | acrylic Acid | 12 eq | +4.25 | 65 |
| 60 | $CDCl_3$ | propanoic acid | 12 eq | +4.87 | 61 |
| 61 | $CDCl_3$/Acetone, 2 : 3 | $B(OH)_3$ 50% (in $H_2O$) | 12 eq | +9.5 | 55 |
| [a] Determined by $^1$H-NMR using hexamethyldisiloxane as internal standard. | | | | | |

Testing of different water scavengers for γ-Butyrolactone (examples 62-68)

Preparation on a 130 mmol scale comprising drying of GBL by adding $CaH_2$ (Example 62):

The ring-opening polymerization of γ-butyrolactone (GBL) was performed under $N_2$ atmosphere in a 50 mL Schlenk round bottom flask which was previously dried in an oven at 120 °C overnight. The flask was charged with calcium hydride (112 mg, 1 wt%) and GBL (10.0 mL, 130.1 mmol) and was flushed with $N_2$ and sealed. The mixture in the sealed flask was then heated to 60 °C during 2 hours. After cooling to room temperature, the sealed flask was immersed in a cooling bath at -20 °C during 30 min (step (a2)). A separate dry vial was charged with the base (anhydrous solution of potassium tert-butoxide in 2-MeTHF, 2 M, 25 wt.%, 0.170 mL, 0.25 mol% relative to GBL), the initiator (anhydrous benzyl alcohol, 0.135 mL, 1.30 mmol) and anhydrous Me-THF (1.130 mL, resulting in a concentration of GBL of 100 M in the reaction mixture to be formed), and sealed (step (a1)). The obtained premix Base/Initiator/Solvent was homogenized for 5 min, and cooled to -20 °C for 10 minutes. A reaction mixture was formed (step (a3)) by quickly adding the premix to the cold GBL via a gastight syringe to start the ring-opening polymerization of GBL (step (b)). After 4 hours at -20 °C, the polymerization was quenched (step (c)) by addition of a cold (-20 °C) quenching solution comprising acetic acid (2 mol.% relative to GBL) dissolved in 40 mL dichloromethane before gently crushing the white solid polymer formed. The quenched reaction mixture was filtered and washed with distilled water (3 x 80 mL) and then the volatile constituents were evaporated using a rotative evaporator (40 °C, until 20 mbar was reached). The remaining viscous liquid was precipitated using cold MeOH, filtered, washed with cold MeOH and dried under vacuum on rotative evaporator to obtain the 4-hydroxybutyrate (3.443 g, 40.0 mmol, 30% yield).

Preparation with Incozol 2 (formula (IV) on a 65.05 mmol scale (examples 63-68):

The ring-opening polymerization of γ-butyrolactone was performed under $N_2$ atmosphere in a 50 mL Schlenk flask which was previously dried in an oven at 120 °C overnight. After performing 3 cycles of high vacuum/$N_2$ the dried flask was sealed and charged with GBL (5.0 mL, 65.05 mmol) via a gastight syringe. The water scavenger Incozol 2 (Incorez ltd., 0.1 to 0.3 mol.%) was added to the GBL and the resulting mixture was stirred for 1 hours at ambient temperature. The sealed flask was then immersed in a cooling bath at -20 °C during 30 min (step (a2)). A separate dry vial was charged with the base (anhydrous solution of potassium tert-butoxide in 2-MeTHF, 2 M, 25 wt.%, 0.35 to 0.6 mol%, relative to GBL, cf. table 6), the initiator indicated in table 6 (anhydrous benzyl alcohol or polyethylene glycol $M_w$=400 (PEG 400), 0.25 to 1.0 mol% relative to GBL, cf. table 6) and anhydrous Me-THF (65.0 μL, resulting in a concentration of GBL of 100 M in the reaction mixture to be formed), and sealed (step (a1)). The obtained premix Base/Initiator/Solvent was homogenized for 5

min and cooled to -20 °C for 10 minutes. A reaction mixture was formed (step (a3)) by quickly adding the premix to the cold GBL via a gastight syringe to start the ring-opening polymerization of GBL (step (b)). After 4 hours at -20 °C, the polymerization was quenched (step (c)) by addition of a cold (-20 °C) quenching solution comprising acetic acid (2 mol% relative to GBL) dissolved in 40 mL dichloromethane before gently crushing the white solid polymer formed. The quenched reaction mixture was washed with distilled water (3 x 50 mL) and then the volatile constituents were evaporated using a rotative evaporator (40 °C, until 20 mbar was reached). The remaining viscous liquid was precipitated using cold MeOH, filtered, washed with cold MeOH and dried under vacuum on rotative evaporator to obtain the corresponding poly- γ-butyrolactone.

Table 6

| Example | Initiator (I) / Base (B) | Mol Ratio GBL/I/ B | Scale (mmol) | Water scavenger | mol% water scavenger | Solvent | Yield (%)[b] |
|---|---|---|---|---|---|---|---|
| 62 | BnOH/tBuOK | 1400 / 4 / 1 | 130 | $CaH_2$[a] | 1.0 | 2-Me-THF | 30 |
| 63 | BnOH/tBuOK | 500 / 5 / 3 | 65 | Incozol 2 | 0.3 | 2-Me-THF | 53 |
| 64 | BnOH/tBuOK | 300 / 3 / 1 | 65 | Incozol 2 | 0.1 | 2-Me-THF | 41 |
| 65 | BnOH/tBuOK | 200 / 2 / 1 | 65 | Incozol 2 | 0.2 | Chlorobenzene | 30 |
| 66 | PEG 400/tBuOK | 400 / 1 / 4 | 65 | Incozol 2 | 0.2 | 2-Me-THF | 29 |
| 67 | PEG 400/tBuOK | 200 / 1 / 1 | 65 | Incozol 2 | 0.2 | 2-Me-THF | 26 |
| 68 | PEG 400/tBuOK | 200 / 2 / 1 | 65 | Incozol 2 | 0.2 | 2-Me-THF | 31 |
| [a] GBL mixed with $CaH_2$ (1 wt%) and heated to 60 °C for 2 hours prior to the addition of Base/Initiator/Solvent pre-mix<br>[b] Isolated yield | | | | | | | |

Physical parameters of 4-hydroxybutyrate synthesized in examples 62-68 in the presence of a water scavenger are compiled in table 7. "N.D." means that the parameter was not determined.

Table 7:

| Example | $M_{n\ exp}$ (g/mol) | $M_{w\ exp}$ (g/mol) | Đ ($M_w/M_n$) | $T_{5\%}$ (°C) | $T_g$ (°C) | $T_c$ (°C) | $T_m$ (°C) |
|---|---|---|---|---|---|---|---|
| 60 | 7861 | 13571 | 1.73 | 225 | -57.2 | 11.9 | 54.6 |
| 61 | 4259 | 6657 | 1.56 | 227 | -46.7 | 17.5 | 58.9 |
| 62 | 8592 | 13263 | 1.54 | 247 | -49.3 | 16.1 | 59.7 |
| 63 | 6739 | 13001 | 1.93 | N.D. | N.D. | N.D. | N.D. |
| 64 | 8791 | 15497 | 1.76 | N.D. | N.D. | N.D. | N.D. |
| 65 | 8221 | 13655 | 1.66 | N.D. | N.D. | N.D. | N.D. |
| 66 | 9083 | 13017 | 1.43 | N.D. | N.D. | N.D. | N.D. |

$M_n$, $M_w$ and Đ were determined from GPC in THF.

Decomposition onset temperature ($T_{5\%}$) was measured by TGA.

Glass transition temperature ($T_g$), crystallization temperature ($T_c$) and melting temperature ($T_m$) were measured by DSC.

Methods:

The number-average molecular weight ($M_n$), the weight-average molecular weight ($M_w$) and the molecular weight distribution (Đ) were determined by gel permeation chromatography (GPC). The measurements were performed at 40 °C with THF as eluent and a flow rate of 1 mL/min on an Agilent 1260 Infinity II GPC instrument equipped with two PLgel 3 μm mixed-E columns. The polymer concentration in THF was 4 mg/mL and 1,2-dichlorobenzene was used as a reference. A conventional calibration with polystyrene standards was used for the molecular weight determination.

Thermogravimetric analyses (TGA) were performed on a Mettler Toledo STAR$^e$ DSC/TGA analyzer. Polymer samples were heated from 20 to 500 °C in $N_2$ atmosphere at a rate of 10 °C/min.

Differential scanning calorimetry (DSC) measurements were performed on a Netzsch DSC 200 F3 Maia apparatus under $N_2$ atmosphere, with a flow rate of 30 mL/min. After a first scan allowing to reset thermal history, a second heating was performed from -80°C to 120°C with a heating and cooling rate of 10 °C/min.

<u>Comparative example 1 (non-inventive): GBL quickly added to cold Base/Initiator/Solvent</u>

The ring-opening polymerization of γ-butyrolactone was performed in a flame-dried 100 mL round bottom flask. In an Argon filled glovebox, the flask was charged with the base potassium tert-butoxide (0.036 g, 0.325 mmol, 0.25 mol% relative to GBL) followed by the solvent 2-MeTHF (1.301 mL. resulting in a concentration of GBL of 100 M in the reaction mixture to be formed) and the initiator benzyl alcohol (0.135 mL, 1.301 mmol, 1.0 mol% relative to GBL) and sealed with a septum. A separate 20 mL sealed vial was charged with GBL (10 mL, 130 mmol, 1.0 eq.). The premix Base/Initiator/Solvent was homogenized for 5 min. The reactor (i.e. the flask) and the vial were taken out of the glovebox. The round bottom flask with Base/Initiator/Solvent was immersed in the cooling bath at -20 °C. After 40 min equilibration at the desired temperature, a reaction mixture was formed and the polymerization was initiated by quick addition of the γ-butyrolactone via a syringe. After 4 hours at -20 °C, the polymerization was quenched by addition of 40 mL of cold (-20 °C) acetic acid/ $CHCl_3$ (2 μL/mL) solution, until the precipitated polymer was redissolved at -20 °C. The quenched reaction mixture was washed with distilled water (3 x 100 mL) and then the volatile constituents were evaporated using a rotative evaporator (at 35 °C until 20 mbar was reached). The remaining viscous liquid was precipitated using cold MeOH:H2O 9:1, filtered, washed with cold MeOH:$H_2O$ 9:1 and dried under high vacuum (0.1 mbar) for 24 hours, to afford the corresponding poly-γ-butyrolactone (5.72 g, 66.4 mmol, 51% yield, $M_n$= 7161 g/mol).

**$M_n$** (average mass in g/mol or Da) was determined by $^1$H-NMR of the pure polymer by comparing the integration of the $CH_2$ signal from the benzyl alcohol at 5.12 ppm A, with the $CH_2$ signal from the poly-4-hydroxybutyrate at 4.12 ppm B, due to the presence of only 1 benzyl alcohol molecule per polymer chain. $M_n$ was calculated using the following equation, protons are not taken into account here as two $CH_2$ are being compared:

$$\mathbf{M_n = (B/A)*Mw(\gamma\text{-butyrolactone})+Mw(benzyl\ alcohol)}$$

## Claims

1. Process for the synthesis of poly-4-hydroxybutyrate, said process comprising the steps of

    (a) preparing a reaction mixture comprising

    (i) one or more bases comprising an alkali metal cation
    (ii) one or more alcohols
    and

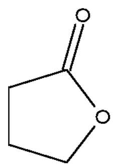

I

    (iii) γ-butyrolactone (I)

    wherein in the reaction mixture the molar ratio of γ-butyrolactone (iii) to the total amount of (i) bases comprising an alkali metal cation is 200 : 1 or higher,
    wherein preparing the reaction mixture comprises

    (a1) forming a premix comprising

    (i) one or more bases comprising an alkali metal cation and
    (ii) one or more alcohols

    (a2) providing (iii) γ-butyrolactone having a temperature of -25 °C or more

(a3) obtaining the reaction mixture by charging the premix formed in step (a1) into the γ-butyrolactone having a temperature of -25 °C or higher provided in step (a2),

(b) chemically converting the γ-butyrolactone in said reaction mixture by ring opening-polymerization to poly-4-hydroxybutyrate at a temperature of -25 °C or higher.

**2.** Process according to claim 1, wherein

(i) the one or more bases comprising an alkali metal cation are selected from the group consisting of lithium alkoxides, sodium alkoxides and potassium alkoxides, preferably lithium methoxide, sodium methoxide, potassium methoxide, lithium tertbutoxide, sodium tertbutoxide, potassium tertbutoxide, lithium benzylalcoholate, sodium benzylalcoholate and potassium benzylalcoholate.

**3.** Process according to any of claims 1 and 2, wherein
(ii) the one or more alcohols are selected from the group consisting of methanol, ethanol, ethyleneglycol, diethyleneglycol, polyethyleneglycol, 1,2-propanediol, dipropyleneglycol, polypropyleneglycol, 1,3-propanediol, 1,4-butanediol, polytetra-methyleneglycol, 1,5-pentanediol, 1,6-hexanediol and benzylic alcohols according to formula (II)

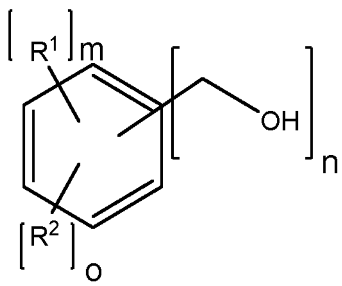

(II)

wherein

n is an integer from 1 to 4, preferably 1 or 2
m is an integer from 0 to 3,
o is 0 or 1
m + n + o ≤ 6;
$R^1$ and $R^2$ are independently of one another selected from the group consisting of
F, Cl, Br, OH, CN, $NH_2$, $NO_2$,
$C_1$-$C_{10}$-alkyl,
$C_3$-$C_{10}$-cycloalkyl,
$C_3$-$C_{10}$-heterocyclyl comprising at least one heteroatom selected from N, O and S,
$C_5$-$C_{14}$-aryl,
$C_5$-$C_{10}$-heteroaryl comprising at least one heteroatom selected from N, O and S,
wherein said $C_1$-$C_{10}$-alkyl, $C_3$-$C_{10}$-cycloalkyl, $C_3$-$C_{10}$-heterocyclyl, $C_5$-$C_{14}$-aryl, $C_5$-$C_{10}$-heteroaryl, resp., optionally has one or more further substituents selected from the group consisting of: F, Cl, Br, OH, CN, $NH_2$ and $C_1$-$C_{10}$-alkyl,
wherein the benzylic alcohol according to formula (II) is preferably selected from the group consisting of benzylic alcohol, 1,4-benzenedimethanol, 2,6-dichlorobenzylalcohol, 4-methylbenzylalcohol and 2,4,6-trimethyl-benzylalcohol.

**4.** Process according to any preceding claim, wherein

(i) said base comprising an alkali metal cation is an alkali metal alkoxide of the formula $MOR^3$ wherein M is selected from the group consisting of Li, Na and K
(ii) said alcohol is an alcohol of the formula $R^3OH$

wherein $R^3$ of (i) is identical to $R^3$ of (ii) and is preferably selected from the group consisting of methyl, ethyl, isopropyl, sec-butyl, tert-butyl and benzyl.

**5.** Process according to any preceding claim, wherein step

(b) chemically converting γ-butyrolactone (I) by ring opening-polymerization to poly-4-hydroxybutyrate is carried out at a temperature in the range of from -25°C to +50°C, preferably from -25°C to -10°C.

**6.** Process according to any preceding claim, wherein in the reaction mixture prepared in step (a) the molar ratio of γ-butyrolactone (I) to the total amount of (i) bases comprising an alkali metal cation is in the range of from 200:1 to 800:1, preferably 200:1 to 400:1.

**7.** Process according to any preceding claim, wherein in the reaction mixture prepared in step (a) the molar ratio of the total amount of

(i) bases comprising an alkali metal cation
to the total amount of
(ii) alcohols

is in the range of from 1:1 to 10:1, preferably of from 1:1 to 5:1.

**8.** Process according to any preceding claim, wherein the reaction mixture prepared in step (a) further comprises one or more solvents
wherein said one or more solvents are preferably selected from the group consisting of aliphatic hydrocarbons, aromatic hydrocarbons, ethers, esters, N,N-dialkylamides, dialkylsulfoxides and nitriles.

**9.** Process according to any preceding claim, wherein for preparing the reaction mixture in step (a)

- a premix comprising (i) one or more bases comprising an alkali metal cation and (ii) one or more alcohols and one or more solvents
and/or
- a mixture comprising (iii) γ -butyrolactone (I) and one or more solvents is provided,

wherein in each case the one or more solvent are preferably selected from the group consisting of aliphatic hydrocarbons, aromatic hydrocarbons, ethers, esters, N,N-dialkylamides, dialkylsulfoxides and nitriles.

**10.** Process according to any preceding claim, further comprising

drying of the γ-butyrolactone (I) by adding a drying agent, and optional separation of the dried γ-butyrolactone (I) from the drying agent before preparing the reaction mixture,
wherein the drying agent is preferably selected from the group consisting of

$CaH_2$,
tosyl isocyanate,
and oxazolidines
wherein the oxazolidine is preferably selected from the group consisting of oxazolidines of formula (III), oxazolidines of formula (IV), and oxazolidines of formula (V)

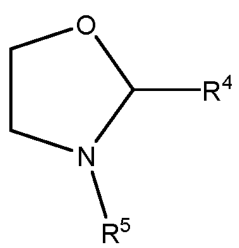

(III)

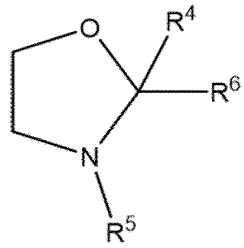

(IV)

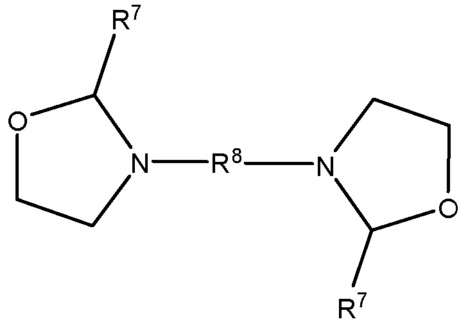

(V)

wherein $R^4$, $R^5$, $R^6$, and $R^7$ are independently of one another selected from the group consisting of H- and $C_1$-$C_{10}$-alkyl and $R^8$ is a bridging unit comprising 1 to 20 -$CH_2$-units and optionally one or more moieties selected from the group consisting of -NH-, -O-, -CO-, -COO- and -NH-COO-.

**11.** Process according to any preceding claim, wherein the γ-butyrolactone provided in step (a2) has a water content of 0.1 wt% or lower, preferably 0.05 wt% or lower, and most preferably 0.01 wt% or lower, as measured by Karl-Fischer-titration.

**12.** Process according to any preceding claim, further comprising the step of
(c) quenching the ring-opening polymerization by adding a quenching solution comprising one or more acids and one or more solvents to the reaction mixture,
wherein

- said one or more acids are preferably selected from the group consisting of hydrohalogenic acids, oxo-acids of Cl, S, N, P and B, alkylsulfonic acids, arylsulfonic acids, mono-, di- and tri-functional carboxylic acids,
- said one or more solvents are preferably selected from the group consisting of halogenated aliphatic and aromatic hydrocarbons, ketones, ethers, dialkylcarbonates, dialkylsulfoxides and nitriles
- said quenching solution preferably has a temperature in the range of from -25°C to 20°C.

**13.** Process according to any preceding claim, said process comprising the steps of

(a) preparing a reaction mixture by

(a1) forming a premix comprising

(i) one or more bases selected from the group consisting of lithium tertbutoxide, sodium tertbutoxide, potassium tertbutoxide and potassium benzylalcoholate
and
(ii) one or more alcohols selected from the group consisting of methanol, ethanol, polyethyleneglycol, 1,4-butanediol, 1,6-hexanediol, benzylic alcohol, 1,4-benzenedimethanol, 2,6-dichlorobenzylalcohol, 4-methylbenzylalcohol and 2,4,6-trimethylbenzylalcohol,

(a2) providing γ-butyrolactone (I) having a temperature in the range of from -25°C to -10°C and a water

content of 0.1 wt% or lower
(a3) forming a reaction mixture by charging the premix formed in step (a1) into the γ-butyrolactone provided in step (a2)
wherein in the reaction mixture

- the molar ratio of γ-butyrolactone to the total amount of bases (i) is in the range of from 200 : 1 to 400 :1 and
- the molar ratio of the total amount of bases (i) to the total amount of alcohols (ii) is in the range of from 1 : 1 to 1 : 8

wherein the reaction mixture further comprises a solvent selected from the group consisting of dichloromethane, toluene, 2-methyl-tetrahydrofurane, 1,4-dioxane, glyme, diglyme, ethyl acetate, dimethylformamide, dimethylsulfoxide and acetonitrile and mixtures thereof

(b) chemically converting the γ-butyrolactone in the reaction mixture by ring opening-polymerization to poly-4-hydroxybutyrate at a temperature in the range of from -25°C to -10°C
(c) quenching the ring-opening polymerization by adding a quenching solution to the reaction mixture,

said quenching solution comprising an acid selected from the group consisting of hydrochloric acid, perchloric acid, nitric acid, sulfuric acid, phosphoric acid, boric acid, formic acid, acetic acid, acrylic acid, oxalic acid, propionic acid, lactic acid, citric acid, methanesulfonic acid and toluenesulfonic acid
dissolved in a solvent selected from the group consisting of trichloromethane, deuterotrichloromethane, 1,2-dichlorethane, 1,1,2,2-terachlorethane, chlorobenzene, 1,4-dioxane, anisole, dimethylether, acetone, acetophenone, dihydrolevoglucosenon, dimethylcarbonate, diethylcarbonate, dimethylsulfoxide, acetonitrile and mixtures thereof,
said quenching solution having a temperature in the range of from -25°C to 20°C.

**14.** Use of a kit comprising

(i) one or more bases comprising an alkaline metal cation
(ii) one or more alcohols

in a process according to any of claims 1 to 13.

**15.** Poly-4-hydroxybutyrate obtainable by a process according to any of claims 1 to 13.

**Patentansprüche**

**1.** Verfahren zur Synthese von Poly-4-Hydroxybutyrat, wobei der Prozess die Schritte von

(a) Vorbereitung eines Reaktionsgemischs, das aus

(i) eine oder mehrere Basen, die aus einem Alkalimetall-Kation bestehen
(ii) ein oder mehrere
Alkohole und

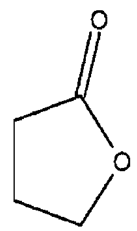

I

(iii) γ-Butyrolacton (I)

wobei im Reaktionsgemisch das molare Verhältnis von y-Butyrolacton (iii) zu dem Die Gesamtmenge der (i)-Basen, die ein Alkalimetallkation ausmachen, beträgt 200 : 1 oder mehr, wobei die Herstellung der Reaktionsmischung aus

(a1) Bildung eines Premix, der aus

(i) eine oder mehrere Basen, die aus einem Alkalimetall-Kation bestehen und
(ii) ein oder mehrere Alkohole

(a2) wobei (iii) y-Butyrolacton mit einer Temperatur von -25 °C oder mehr
(a3) bereitgestellt wird Erlangung des Reaktionsgemisches durch Aufladen des im Schritt gebildeten Vorgemisch
(a1) in den y-Bütyrolacton mit einer Temperatur von -25 °C oder höher, die in Stufe (a2) bereitgestellt wird,

(b) chemische Umwandlung des y-Butyrolacton in der genannten Reaktionsmischung durch Ringöffnungs-Polymerisation in Poly-4-Hydroxybutyrat bei einer Temperatur von -25 °C oder höher.

**2.** Verfahren gemäß Anspruch 1, wobei

(i) Die eine oder mehrere Basen, aus denen ein Alkalimetall-Kation besteht, werden aus der Gruppe ausgewählt, die aus Lithiumalkoxiden, Natriumalkoxiden und Kaliumalkox-Iden besteht, vorzugsweise Lithiummethoxid, Natriummethoxid, Kaliummethoxid, Lithiumtertbutoxid, Natriumtertbutoxid, Kaliumtertbutoxid, Lithiumben-Zylalkoholat, Natriumbenzylalkoholat und Kaliumbenzylalkoholat.

**3.** Verfahren gemäß jedem der Ansprüche 1 und 2, wobei
(ii) Die einen oder mehrere Alkohole werden aus der Gruppe ausgewählt, die aus Methanol, Ethanol, Ethylenglykol, Diethylenglykol, Polyethylenglykol besteht, 1,2-Propanediol, Dipropylenglykol, Polypropyleneglykol, 1,3-Propanediol, 1,4-Butanediol, Polytetra-Methylenglykol, 1,5-Pentanagiol, 1,6-Hexanediol und Benzylalkohole gemäß Formel (II)

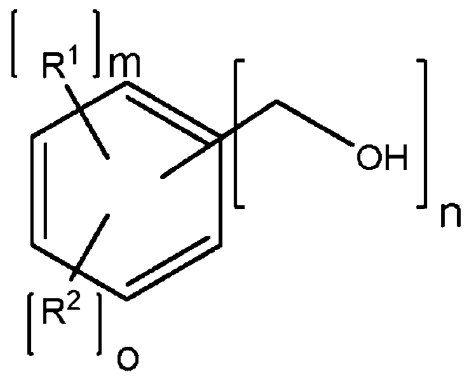

(II)

wobei

n ist eine ganze Zahl von 1 bis 4,
vorzugsweise 1 oder 2, m ist eine ganze
Zahl von Oto 3,
o ist 0 oder 1
m + n + o ≤ 6;
R1 und R2 sind unabhängig voneinander ausgewählt und aus der Gruppe ausgewählt, die aus
F, Cl, Br, OH, CN, NH2, NO2,
C1-C10-alkyl,

C3-C10-Cycloalkyl,
C3-C10-Heterocyclyl besteht aus mindestens einem Heteroatom, das aus N, O und S ausgewählt wird,
Cs-Cwaryl,
Cs-C10-Heteroaryl besteht aus mindestens einem Heteroatom, das aus N, 0 und S ausgewählt wird,
wobei C1-C10-Alkyl, C3-C10-Cycloalkyl, C3-C10-Heterocyclyl, Cs-Cwaryl, Cs-C10-heteroaryl, jeweils, hat optional einen oder mehrere weitere Substituenten, die aus der Gruppe selektiert sind, bestehend aus: F, Cl, Br, OH, CN, NH2 und C1-C10-alkyl,
wobei der Benzylalkohol gemäß Formel (II) vorzugsweise aus der Gruppe ausgewählt wird, die aus Benzylalkohol, 1,4-Benzenedimethanol, 2,6-Dichlorbenzylalkohol, 4-Methylbenzylalkohol und 2,4,6-Trimethyl-Benzylalkohol.

**4.** Bearbeitung gemäß einem vorherigen Anspruch, wobei

(i) Diese Base, die aus einem Alkalimetallkation besteht, ist ein Alkalimetallalkoxid der Formel MOR3, wobei M aus der Gruppe aus Li, Na und K ausgewählt wird
(ii) sagte Alkohol sei ein Alkohol der Formel R3OH

wobei R3 von (i) identisch mit $R^3$ von (ii) ist und vorzugsweise aus der Gruppe aus Methyl, Ethyl, Isopropyl, Sec-Butyl, Tert-Butyl und Benzyl ausgewählt wird.

**5.** Bearbeiten Sie gemäß einem vorangegangenen Anspruch, wobei Schritt Schritt

(b) chemische Umwandlung von Y-Butyrolacton (I) durch Ringöffnungs-Polymerisation in
Poly-4-Hydroxybutyrat
wird bei einer Temperatur im Bereich von -25°C bis +S0°C durchgeführt, vorzugsweise ab
-25°C bis -10°C.

**6.** Prozess gemäß einer vorangegangenen Behauptung, bei der in Schritt (a) hergestellte Reaktionsmischung das molare Verhältnis von y-Butyrolacton (i) zur Gesamtmenge der (i) Basen com-
Das Pressen eines Alkalimetallkationen liegt im Bereich von 200:1 bis 800:1, vorzugsweise 200:1 bis 400:1.

**7.** Prozess gemäß einer beliebigen vorangegangenen Behauptung, bei der im Reaktionsgemisch im Schritt (a) das molare Verhältnis der Gesamtmenge von

(i) Basen, die aus einem Alkalimetall-Kation bestehen auf die Gesamtmenge von
(ii) Alkohole
liegt im Bereich von 1:1 bis 10:1, vorzugsweise von 1:1 bis 5:1.

**8.** Verfahren gemäß einer beliebigen vorangegangenen Behauptung, wobei das in Schritt (a) hergestellte Reaktionsgemisch zusätzlich aus einem oder mehreren Lösungsmitteln besteht
wobei vorzugsweise ein oder mehrere Lösungsmittel aus der Gruppe ausgewählt werden, die aus aliphatischen Kohlenwasserstoffen, aromatischen Kohlenwasserstoffen, Ethern, Estern, N,N-Dialkylamiden, Dialkylsulfoxiden und Nitrilen besteht.

**9.** Prozess gemäß einer beliebigen vorangegangenen Behauptung, wobei zur Herstellung des Reaktionsgemisches in Schritt (a)

eine Vormischung, die aus (i) einer oder mehreren Basen besteht, die aus einem Alkalimetallkation bestehen, und (ii) einem oder mehreren Alkoholen und einem oder mehreren Lösungsmitteln
und/oder
eine Mischung aus (iii) y -Butyrolacton (I) und einem oder mehreren Lösungsmitteln wird bereitgestellt,

wobei in jedem Fall ein oder mehrere Lösungsmittel bevorzugt aus der Gruppe ausgewählt werden, die aus aliphatischen Kohlenwasserstoffen, aromatischen Kohlenwasserstoffen, Ethern, Estern, N,N-Dialkylamiden, Dialkylsulfoxiden und Nitrilen besteht.

**10.** Verfahren gemäß jedem vorherigen Anspruch, der weitere umfasst

Trocknung des y-Butyrolactons (I) durch Zugabe eines Trocknungsmittels und optionale Trennung von das getrocknete y-Butyrolacton (I) aus dem Trocknungsmittel vor der Herstellung der Reaktionsmischung, wobei das Trocknungsmittel vorzugsweise aus der Gruppe aus CaH2
ausgewählt wird,
Tosyl-Isocyanat,
und Oxazolidine
wobei das Oxazolidin vorzugsweise aus der Gruppe ausgewählt wird, die aus Oxazolidinen der Formel (III), Oxazolidinen der Formel (IV) und Oxazolidinen der Formel (V) besteht

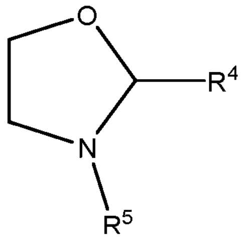

(III)

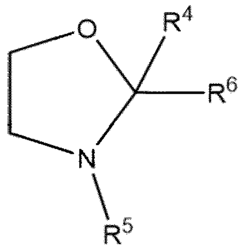

(IV)

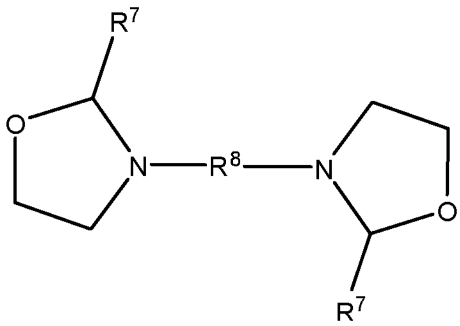

(V)

wobei R4, R5, $R^6$ und $R^7$ unabhängig voneinander ausgewählt werden und aus der Gruppe aus H- und C1-C10-Alkyl und R8 eine Brückeeinheit ist, die aus 1 bis 20 - CH2-Einheiten besteht und optional aus einer oder mehreren Gruppen aus der Gruppe besteht, die aus
-NH-, -0-, -CO-, -COO- und -NH-COO-.

**11.** Prozess gemäß einer vorherigen Behauptung, bei der das in Schritt (a2) angegebene y-Butyrolacton einen Wassergehalt von 0,1 Gewichtsprozent oder weniger, vorzugsweise 0,05 Gewichtsprozent oder weniger, und am besten 0,01 Gewichtsprozent oder weniger, gemessen durch Karl-Fischer-Titration, aufweist.

**12.** Prozessieren gemäß einer vorherigen Behauptung, die den Schritt von weiter umfasst
(c) Löschung der ringöffnenden Polymerisation durch Zugabe einer Abschrecklösung aus einer oder mehreren Säuren und einem oder mehreren Lösungsmitteln zur Reaktionsmischung,
wobei

Diese genannten Säuren werden vorzugsweise aus der Gruppe ausgewählt, die aus hydrohalogenhaltigen Säuren, Oxosäuren aus Cl, S, N, P und B, Alkylsulfonsäuren, Arylsulfonsäuren, Mono-, Di- und Trifunktions-Carbonsäuren besteht,
Diese Lösungsmittel werden vorzugsweise aus der Gruppe ausgewählt, die aus halogenierten aliphatischen und aromatischen Kohlenwasserstoffen, Ketonen, Ethern, Dialkylcarbonaten, Dialkylsulfoxiden und Nitrilen besteht, ausgewählt
diese Abschrecklösung hat vorzugsweise eine Temperatur im Bereich von -25°C bis 20°C.

**13.** Verfahren gemäß jedem vorangegangenen Anspruch, wobei dieser Prozess die Schritte von

(a) Vorbereitung eines

Reaktionsgemisches durch (a1)
Bildung eines Premix, der
aus

(i) eine oder mehrere Basen aus der Gruppe ausgewählt, bestehend aus Lithiumtertbutoxid, Natriumtertbutoxid, Kaliumtertbutoxid und Kaliumbenzylalkoholat und
(ii) Einer oder mehrere Alkohole aus der Gruppe ausgewählt, bestehend aus Meth-Anol, Ethanol, Polyethylenglykol, 1,4-Butanediol, 1,6-Hex-Anediol, Benzylalkohol, 1,4-Benzenedimethanol, 2,6-DichloroBenzylalkohol, 4-Methylbenzylalkohol und 2,4,6-Trimethylbenzylalkohol,

(a2) Y-Butyrolacton (I) mit einer Temperatur im Bereich von von -25°C bis -10°C und ein Wassergehalt von 0,1 Gewichtsprozent oder weniger
(a3) Bildung einer Reaktionsmischung durch Aufladen des im Schritt (A1) gebildeten Vorgemisch
in das Y-Butyrolacton bereitgestellt in Schritt
(A2), wobei die Reaktionsmischung

Das molare Verhältnis von y-Butyrolacton zur Gesamtmenge der Basen (i) liegt im Bereich von 200 : 1 bis 400 :1
und
Das molare Verhältnis der Gesamtmenge der Basen (i) zur Gesamtmenge der Alkohole (ii) liegt im Bereich von 1 : 1 bis 1 : 8

wobei die Reaktionsmischung außerdem ein Lösungsmittel aus der Gruppe aus Dichlormethan, Toluol, 2-Methyl-Tetrahydrofuran, 1,4-Dioxan, Glyme, Diglym, Ethylacetat, Dimethylformamid, Dimethylsulfoxid und Acetonitril sowie deren Mischungen umfasst

(b) chemische Umwandlung des y-Butyrolacton im Reaktionsgemisch durch ringöffnende Polymerisation in Poly-4-Hydroxybutyrat bei einer Temperatur im Bereich von -25°C bis -10°C
(c) Die ringöffnende Polymerisation wird durch Zugabe einer Abschrecklösung zum Reaktionsgemisch abgeschreckt,

Diese Abschrecklösung besteht aus einer Säure, die aus der Gruppe aus Salzsäure, Perchlorsäure, Salpetersäure, Schwefelsäure, Phosphorsäure, Borsäure, Ameisensäure, Essigsäure, Acrylsäure, Oxalsäure, Propionsäure, Milchsäure, Zitronensäure, Methansulfonsäure und Toluolsulfonsäure besteht.
gelöst in einem Lösungsmittel, das aus der Gruppe bestehend aus Trichlormethan ausgewählt wurde, Deuterotrichlormethan, 1,2-Dichlorethan, 1,1,2,2-Terachlorethan, Chlorbenzol, 1,4-Dioxan, Anisol, Dimethylether, Aceton, Acetophenon, DihyDrolevoglucosenon, Dimethylcarbonat, Diethylcarbonat, Dimethylsulfoxid, Acetonitril und deren Mixturen,
Diese Abschrecklösung hat eine Temperatur im Bereich von -25°C bis 20°C.

**14.** Verwendung eines Bausatzes, der aus

(i) eine oder mehrere Basen, die aus einem alkalischen Metallkation bestehen
(ii) ein oder mehrere Alkohole

in einem Verfahren gemäß einem der Ansprüche 1 bis 13.

**15.** Poly-4-Hydroxybutyrat, das durch ein Verfahren gemäß einem der Ansprüche 1 bis 13 gewonnen werden kann.

**Revendications**

**1.** Procédé de synthèse du poly-4-hydroxybutyrate, ce procédé comprenant les étapes de

(a) Préparation d'un mélange de réaction comprenant

(i) une ou plusieurs bases constituant un cation de métal alcalin
(ii) un ou plusieurs
alcools et

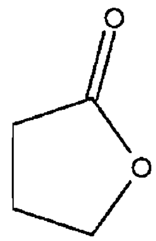

I

(iii) y-butyrolactone (I)

dans lequel dans le mélange réactionnel le rapport molaire de y-butyrolactone (iii) à la
Le nombre total de bases (i) composées d'un cation de métal alcalin est de 200 : 1 ou plus, dans lequel la préparation du mélange réactionnel comprend

(a1) formant un prémix composé de

(i) une ou plusieurs bases composées d'un cation de métal alcalin et
(ii) un ou plusieurs alcools

(a2) fournissant (iii) la y-butyrolactone ayant une température de -25 °C ou plus
(a3) obtenir le mélange réactionnel en chargeant le prémix formé en étapes
(a1) dans la y-butyrolactone ayant une température de -25 °C ou plus fournie à l'étape (a2),

(b) la conversion chimique de la y-butyrolactone dans ce mélange réactionnel par polymérisation par ouverture en anneau en poly-4-hydroxybutyrate à une température de -25 °C ou plus.

**2.** Procédure selon la revendication 1, dans laquelle

(i) Les une ou plusieurs bases composées d'un cation de métaux alcalin sont sélectionnées parmi le groupe composé d'alkoxydes de lithium, d'alkoxydes de sodium et d'alkox-ides de potassium, de préférence méthoxyde de lithium, méthoxyde de sodium, méthoxyde de potassium,
tertbutoxyde de lithium, tertbutoxyde de sodium, tertbutoxyde de potassium, ben-zylalcoholate de lithium, benzylalcoolate de sodium et benzylalcoholate de potassium.

**3.** Procédure selon l'une des revendications 1 et 2, où
(ii) Un ou plusieurs alcools sont sélectionnés parmi le groupe composé de méthanol, éthanol, éthylèneglycol, diéthylèneglycol, polyéthylèneglycol, 1,2-propanédiol, dipropylèneglycol, polypropylèneglycol, 1,3-propanédiol, 1,4-butanediol, polytétra-méthylèneglycol, 1,5-pentanédiol, 1,6-hexanediol et alcools benzyliques selon la formule (II)

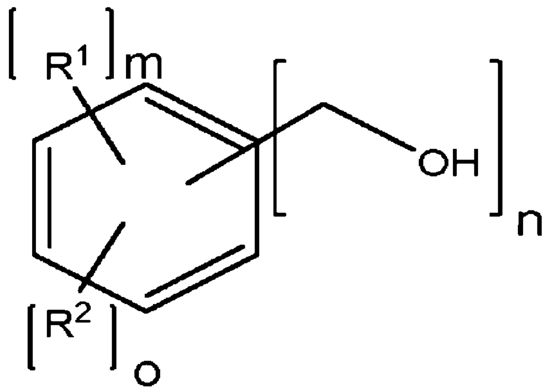

(II)

où

n est un entier de 1 à 4, de préférence 1 ou
2 m est un entier de Oto 3,
o est 0 ou 1
m + n + o ≤ 6;
R1 et R2 sont indépendamment sélectionnés l'un de l'autre dans le groupe composé de
F, Cl, Br, OH, CN, NH2, NO2,
C1-C10-alkyl,
C3-C10-cycloalkyl,
C3-C10-hétérocyclyle comprenant au moins un hétératome sélectionné parmi N, O et S,
Cs-Cwaryl,
Cs-C10-hétéroaryle comprenant au moins un hétératome sélectionné parmi N, 0 et S,
dans lequel c'est dit C1-C10-alkyl, C3-C10-cycloalkyl, C3-C10-hétérocyclyle, Cs-Cwaryl, Cs-C10-hétéroaryle, resp., possède optionnellement un ou plusieurs substituants supplémentaires sé-lects du groupe composé de : **F,** Cl, Br, OH, CN, NH2 et C1-C10-alkyle,
où l'alcool benzylique selon la formule (II) est de préférence sélectionné parmi le groupe composé d'alcool benzylique, de 1,4-benzènediméthanol, de 2,6-dichlorobenzylalcool, de 4-méthylbenzylalcool et de 2,4,6-triméthyl-Alcool benzylalcoolique.

**4.** Procédure selon toute demande précédente, dans laquelle

(i) cette base composée d'un cation de métal alcalin est un alkoxyde de métal alcalin de formule MOR3, dans lequel M est sélectionné parmi le groupe composé de Li, Na et K
(ii) ledit alcool est un alcool de la formule R3OH

où R3 de (i) est identique à R3 de (ii) et est préférablement sélectionné parmi le groupe composé de méthyle, éthyle, isopropyle, sec-butyl, tert-butyl et benzyle.

**5.** Procédure selon toute demande précédente, étape à laquelle

(b) conversion chimique de la y-butyrolactone (I) par polymérisation par ouverture d'anneau en
Poly-4-hydroxybutyrate
se réalise à une température allant de -25°C à +S0°C, de préférence depuis -25°C à -10°C.

**6.** Procédé selon toute affirmation précédente, dans lequel dans le mélange réactionnel préparé à l'étape (a) le rapport molaire de y-butyrolactone (I) à la quantité totale de (i) bases com-
Le prising d'un cation de métal alcali est compris entre 200:1 et 800:1, de préférence 200:1 à 400:1.

**7.** Procéder selon toute affirmation précédente, dans laquelle dans le mélange réactionnel préparé à l'étape (a) le rapport molaire de la quantité totale de

(i) Des bases constituées d'un cation de métaux alcalins au montant total de
(ii) Alcools

est dans la plage de 1:1 à 10:1, de préférence de 1:1 à 5:1.

**8.** Procédé selon toute revendication précédente, dans lequel le mélange réactionnel préparé à l'étape (a) comprend en outre un ou plusieurs solvants
dans lequel un ou plusieurs solvants sont de préférence sélectionnés dans le groupe composé d'hydrocarbures aliphatiques, d'hydrocarbures aromatiques, d'éthers, d'esters, de N,N-dialkylamides, de dialkylsulfoxydes et de nitriles.

**9.** Procéder selon toute revendication précédente, dans lequel préparer le mélange de réaction à l'étape (a)

un prémix composé (i) d'une ou plusieurs bases constituant un cation de métaux alcalin et (ii) d'un ou plusieurs alcools et d'un ou plusieurs solvants et/ou
un mélange composé de (iii) y -butyrolactone (I) et d'un ou plusieurs solvants est fourni,

dans chaque cas, un ou plusieurs solvants sont de préférence sélectionnés parmi le groupe composé d'hydrocarbures aliphatiques, d'hydrocarbures aromatiques, d'éthers, d'esters, de N,N-dialkylamides, de dialkylsulfoxydes et de nitriles.

**10.** Procédure conformément à toute demande précédente, comprenant en outre

séchage de la y-butyrolactone (I) par ajout d'un agent séchant, et séparation optionnelle de la y-butyrolactone (I) séchée à partir de l'agent séchant avant de préparer le mélange de réaction,
où l'agent séchant est de préférence sélectionné parmi le groupe constitué de
CaH2,
Isocyanate de tosyl,
et les oxazolidines
où l'oxazolidine est de préférence sélectionnée parmi le groupe composé d'oxazolidines de formule (III), oxazolidines de formule (IV) et oxazolidines de formule (V)

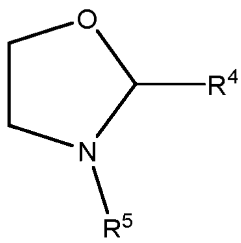

(III)

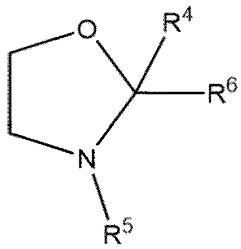

(IV)

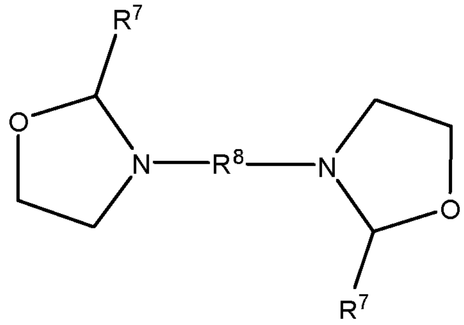

(V)

où R4, R5, R6 et R7 sont indépendamment sélectionnés parmi le groupe constitué de H- et C1-C10-alkyl, et R8 est une unité de transition comprenant de 1 à 20 -CH2-unités et optionnellement une ou plusieurs moitiés sélectionnées dans le groupe composé de -NH-, -0-, -COO-, - et -NH-COO-.

**11.** Procéder selon toute affirmation précédente, où la y-butyrolactone fournie à l'étape (a2) a une teneur en eau de 0,1 % en poids ou moins, de préférence 0,05 % en poids ou moins, et de préférence 0,01 % en poids ou moins, mesurée par la titration de Karl-Fischer.

**12.** Procédure selon toute revendication précédente, comprenant en outre l'étape de
(c) tremper la polymérisation de l'ouverture de l'anneau en ajoutant une solution de trempe comprenant un ou plusieurs acides et un ou plusieurs solvants au mélange de réaction,
où

ledit qu'un ou plusieurs acides sont de préférence sélectionnés parmi le groupe composé d'acides hydrohalogènes, d'oxo-acides de Cl, S, N, P et B, d'acides alkylsulfoniques, d'acides arylsulfoniques, d'acides carboxyliques mono-, di- et tri-fonctionnels,
Un ou plusieurs solvants sont de préférence sélectionnés parmi le groupe constituant des hydrocarbures aliphatiques et aromatiques halogénés, cétones, éthers, dialkylcarbonates, dialkylsulfoxydes et nitriles
cette solution de trempe a de préférence une température comprise entre -25°C et 20°C.

**13.** Procédure selon toute demande précédente, ce processus comprenant les étapes de

(a) Préparation d'un mélange de

réaction par (A1) formant un prémix composé de

(i) une ou plusieurs bases sélectionnées dans le groupe comprenant le tertbutoxyde de lithium, le tertbutoxyde de sodium, le tertbutoxyde de potassium et le benzylalcoholate de potassium
et
(ii) Un ou plusieurs alcools sélectionnés dans le groupe comprenant méthándol-anol, éthanol, polyéthylèneglycol, 1,4-butanediol, 1,6-hex-anédiol, alcool benzylique, 1,4-benzènediméthanol, 2,6-dichloro-alcool benzyl, alcool 4-méthylbenzylalcool et alcool 2,4,6-triméthylbenzyle,

(a2) fournir de la y-butyrolactone (I) ayant une température dans l'intervalle de de -25°C à -10°C et une teneur en eau de 0,1 % en poids ou moins
(a3) former un mélange réactionnel en chargeant le prémélange formé à l'étape (a1)
dans la y-butyrolactone fournie en étape
(a2) où le mélange réactionnel

Le rapport molaire de la Y-butyrolactone par rapport au nombre total de bases (I) est de 200 : 1 à 400 :1
et
Le rapport molaire entre la quantité totale de bases (i) et la quantité totale d'alcools (ii) est de 1 : 1 à 1 : 8
où le mélange réactionnel comprend en outre un solvant sélectionné parmi le groupe composé de dichlorométhane, toluène, 2-méthyl-tétrahydrofurane, 1,4-dioxane, glyme, diglyme, acétate d'éthyle,

diméthylformamide, diméthylsulfoxyde et acétonitrile ainsi que des mélanges

(b) conversion chimique de la y-butyrolactone dans le mélange réactionnel par polymérisation en anneau ouvert en poly-4-hydroxybutyrate à une température comprise entre -25°C et -10°C
(c) tremper la polymérisation à ouverture de l'anneau en ajoutant une solution de trempe au mélange de réaction,

Cette solution de trempe comprend un acide sélectionné parmi le groupe comprenant l'acide chlorhydrique, l'acide perchlorique, l'acide nitrique, l'acide sulfurique, l'acide phosphorique, l'acide borique, l'acide formique, l'acide acétique, l'acide acrylique, l'acide oxalique, l'acide propionique, l'acide lactique, l'acide citrique, l'acide méthanosulfonique et l'acide toluen-sulfonique dissous dans un solvant sélectionné parmi le groupe composé de trichlorométhane,
deutérotrichlorométhane, 1,2-dichloréthane, 1,1,2,2,2-térachloréthane, chloro-benzène, 1,4-dioxane, anisole, diméthylèther, acéthone, acéthone, acéthonne, diy-drolevoglucosénone, diméthylcarbonate, diéthylcarbonate, diméthylsulfoxyde, acétonitrile et leurs mélanges,
cette solution de trempe ayant une température allant de -25°C à -25°C 20°C.

**14.** Utilisation d'un kit comprenant

(i) une ou plusieurs bases constituant un cation de métaux alcalins
(ii) un ou plusieurs alcools

dans un processus selon l'une des revendications 1 à 13.

**15.** Poly-4-hydroxybutyrate obtenable par un procédé selon l'une des revendications 1 à 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 102643301 A
- CN 109851765


### Non-patent literature cited in the description


- **Q. SONG et al.** *Polymer Journal*, 2020, vol. 52, 3-11
- *Macromolecules*, 2018, vol. 51, 9317-9322
- *Polymer Chemistry*, 2022, vol. 13, 439-445
- *Nature Chemistry*, 2016, vol. 8, 42-49
- *Angewandte Chemie International Edition*, 2016, vol. 55, 4188-4193
- Ring-opening polymerization of [gamma]-lactones and copolymerization with other cyclic monomers. **SONG QILEI et al.** Progress in Polymer Science. Pergamon Press, 18 September 2020, vol. 110
- Reactor Types and Their Industrial Applications. **K. HENKEL**. Ullmann's Encyclopedia of Industrial Chemistry. Wiley-VCH Verlag GmbH & Co. KGaA, 2005